(19) Europäisches Patentamt
European Patent Office
Office européen des brevets

(11) **EP 4 529 052 A1**

(12) **EUROPEAN PATENT APPLICATION**
published in accordance with Art. 153(4) EPC

(43) Date of publication:
**26.03.2025 Bulletin 2025/13**

(21) Application number: **23823123.7**

(22) Date of filing: **13.06.2023**

(51) International Patent Classification (IPC):
**H04B 17/382** (2015.01)

(52) Cooperative Patent Classification (CPC):
**H04B 17/382; H04W 72/0453**

(86) International application number:
**PCT/CN2023/099864**

(87) International publication number:
**WO 2023/241555 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.06.2022 CN 202210690357**

(71) Applicant: **Huawei Technologies Co., Ltd.
Shenzhen, Guangdong 518129 (CN)**

(72) Inventors:
• **PENG, Xiaohui**
  **Shenzhen, Guangdong 518129 (CN)**
• **LUO, Jiajin**
  **Shenzhen, Guangdong 518129 (CN)**
• **ZHOU, Baojian**
  **Shenzhen, Guangdong 518129 (CN)**
• **YAN, Min**
  **Shenzhen, Guangdong 518129 (CN)**
• **CHEN, Yan**
  **Shenzhen, Guangdong 518129 (CN)**
• **YANG, Xun**
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **SENSING SIGNAL TRANSMISSION METHOD AND APPARATUS**

(57) This application provides a sensing signal transmission method and an apparatus. In the sensing signal transmission method, frequency channel numbers used for sensing are determined from $M$ sensing resource blocks; and a sensing signal is sent on the frequency channel numbers used for sensing. The M sensing resource blocks are determined from $M_1$ candidate resource blocks, and the $M$ sensing resource blocks include a 1$^{st}$ candidate resource block and an $M_1$$^{th}$ candidate resource block in the $M_1$ candidate resource blocks; and a quantity of frequency channel numbers included in each of the $M$ sensing resource blocks is $K$. The frequency channel numbers used for sensing include: a 1$^{st}$ frequency channel number, a $K$$^{th}$ frequency channel number, an $i$$^{th}$ frequency channel number, and a $j$$^{th}$ frequency channel number in each of the $M$ sensing resource blocks; a length of a frequency baseline between the $i$$^{th}$ frequency channel number and the $j$$^{th}$ frequency channel number is a first value; and relative positions of frequency channel numbers used for sensing in each of the $M$ sensing resource blocks are the same. In the method, the frequency channel numbers used for sensing are determined hierarchically, so that the frequency channel numbers used for sensing can be determined with low complexity.

A first device determines frequency channel numbers used for sensing from $M$ sensing resource blocks, where the $M$ sensing resource blocks are determined from $M_1$ candidate resource blocks, and the $M$ sensing resource blocks include a 1$^{st}$ candidate resource block and an $M_1$$^{th}$ candidate resource block in the $M_1$ candidate resource blocks; a quantity of frequency channel numbers included in each of the $M$ sensing resource blocks is $K$; the frequency channel numbers used for sensing include: a 1$^{st}$ frequency channel number, a $K$$^{th}$ frequency channel number, an $i$$^{th}$ frequency channel number, and a $j$$^{th}$ frequency channel number in each of the $M$ sensing resource blocks; a length of a frequency baseline between the $i$$^{th}$ frequency channel number and the $j$$^{th}$ frequency channel number is a first value; a length of a frequency baseline between two frequency channel numbers is an absolute value of a frequency difference between the two frequency channel numbers; and relative positions of frequency channel numbers used for sensing in each of the $M$ sensing resource blocks are the same — S101

The first device sends a first sensing signal on the frequency channel numbers used for sensing — S102

FIG. 5

EP 4 529 052 A1

## Description

This application claims priority to Chinese Patent Application No. 202210690357.1, filed with the China National Intellectual Property Administration on June 17, 2022 and entitled "SENSING SIGNAL TRANSMISSION METHOD AND APPARATUS", which is incorporated herein by reference in its entirety.

## TECHNICAL FIELD

This application relates to the communication field, and in particular, to a sensing signal transmission method and an apparatus.

## BACKGROUND

A wireless sensing technology is to analyze a change of a wireless signal in a propagation process, to obtain a characteristic of signal propagation space and further implement scenario sensing. Using a radar as an example, a basic principle of the radar is as follows: A transmitter transmits a specific waveform signal, and transmits the waveform signal to a receiver through a wireless channel. A characteristic of the wireless channel is obtained by analyzing a transmitted signal and a received signal, so as to implement wireless sensing.

Wireless communication may be used for information exchange between a transmitting end and a receiving end. A basic principle of the wireless communication is as follows: A transmitter transmits a specific waveform signal, the waveform signal is received by a receiver after passing through a wireless channel, and the receiver performs signal processing and then obtains, through demodulation, the signal transmitted by the transmitter.

From the perspective of signal transmission, signal transmission, and signal reception, processes of wireless communication and wireless sensing are very similar. It can be learned that, when wireless communication and wireless sensing are used together, a surrounding environment can be sensed while the transmitting end and the receiving end communicate with each other. Specifically, a sensing signal may be transmitted on a frequency domain resource. The sensing signal may be used to carry information exchanged between the transmitting end and the receiving end, and may also be used to sense an object in the surrounding environment. In this case, how to determine a frequency domain resource used to transmit the sensing signal is an urgent problem to be resolved.

## SUMMARY

Embodiments of this application provide a sensing signal transmission method and a related apparatus, so that a frequency domain resource used to transmit a sensing signal can be determined with low complexity.

According to a first aspect, an embodiment of this application provides a sensing signal transmission method. The method includes: determining frequency channel numbers used for sensing from $M$ sensing resource blocks; and sending a sensing signal on the frequency channel numbers used for sensing. The $M$ sensing resource blocks are determined from $M_1$ candidate resource blocks, and the $M$ sensing resource blocks include a 1st candidate resource block and an $M_1^{th}$ candidate resource block in the $M_1$ candidate resource blocks; a quantity of frequency channel numbers included in each of the $M$ sensing resource blocks is $K$; and $M$, $M_1$, and $K$ are integers greater than 1, and $M$ is less than or equal to $M_1$. The frequency channel numbers used for sensing include: a 1st frequency channel number, a $K^{th}$ frequency channel number, an $i^{th}$ frequency channel number, and a $j^{th}$ frequency channel number in each of the $M$ sensing resource blocks; a length of a frequency baseline between the $i^{th}$ frequency channel number and the $j^{th}$ frequency channel number is a first value, and $i$ and $j$ are positive integers less than or equal to $K$; and a length of a frequency baseline between two frequency channel numbers is an absolute value of a frequency difference between the two frequency channel numbers. Relative positions of frequency channel numbers used for sensing in each of the $M$ sensing resource blocks are the same.

In the method, a sensing resource block used for transmitting a sensing signal is selected from candidate resource blocks, and then frequency channel numbers used for sensing are selected from frequency channel numbers included in the determined sensing resource block. It can be learned that, in the method, the frequency channel numbers used for sensing are determined hierarchically, and compared with a manner of directly selecting frequency channel numbers used for sensing from a plurality of frequency channel numbers, the method can reduce calculation complexity. In addition, the relative positions of the frequency channel numbers used for sensing in each sensing resource block are the same. Therefore, after frequency channel numbers used for sensing in one sensing resource block are determined, frequency channel numbers used for sensing in another sensing resource block may be known, which can further reduce calculation complexity.

In an optional implementation, a length of a frequency baseline between different sensing resource blocks in the

$M$ sensing resource blocks is a first length; and the first length is $p \times B_1$, and $p$=1, 2, ..., and $\dfrac{B_2}{B_1}$.

A length of a frequency baseline between two sensing resource blocks is an absolute value of a frequency difference between $l^{\text{th}}$ frequency channel numbers in the two sensing resource blocks; in the $M$ sensing resource blocks, a length of a frequency baseline between two sensing resource blocks with a minimum length of a frequency baseline is $B_1$, and a length of a frequency baseline between two sensing resource blocks with a maximum length of a frequency baseline is $B_2$; and $l$ is a positive integer less than or equal to $K$.

It can be learned that, in this implementation, frequency baselines formed by the $M$ sensing resource blocks can be completely covered. When this implementation is applied to a ranging application, accuracy of performing ranging based on the completely covered frequency baselines is higher.

In an optional implementation, a length of a frequency baseline between different frequency channel numbers in the frequency channel numbers used for sensing in each sensing resource block is a second length; and the second length is $k \times b_1$, and $k$=1, 2, ..., and $\dfrac{b_2}{b_1}$.

In the frequency channel numbers used for sensing in each sensing resource block, a length of a frequency baseline between two frequency channel numbers with a minimum length of a frequency baseline is $b_1$, and a length of a frequency baseline between two frequency channel numbers with a maximum length of a frequency baseline is $b_2$; and $b_1$ is equal to the first value.

It can be learned that, in this implementation, frequency baselines formed by the frequency channel numbers used for sensing in each sensing resource block can be completely covered. When this implementation is applied to a ranging application, accuracy of performing ranging based on the completely covered frequency baselines is higher.

In an optional implementation, the $M$ sensing resource blocks are candidate resource blocks included in a first combination determined from the $M_1$ candidate resource blocks, and the first combination is a combination in which a length of a frequency baseline between different candidate resource blocks is the first length and a quantity of candidate resource blocks is the smallest. A length of a frequency baseline between two candidate resource blocks is an absolute value of a frequency difference between $l^{\text{th}}$ frequency channel numbers in the two candidate resource blocks; and in the $M_1$ candidate resource blocks, a length of a frequency baseline between two candidate resource blocks with a minimum length of a frequency baseline is $B_1$, and a length of a frequency baseline between two candidate resource blocks with a maximum length of a frequency baseline is $B_2$.

In this implementation, the $M$ sensing resource blocks with completely covered frequency baselines can be obtained, and a quantity of sensing resource blocks required for the completely covered frequency baselines can be the smallest. That is, in this implementation, the frequency baselines formed by the selected $M$ sensing resource blocks can be completely covered, and selected frequency domain resources can be further reduced.

In an optional implementation, relative positions of the frequency channel numbers used for sensing in each sensing resource block and frequency channel numbers included in a second combination are the same; and the second combination is a combination that is determined from $K$ frequency channel numbers and in which a length of a frequency baseline between different frequency channel numbers is the second length and a quantity of frequency channel numbers is the smallest. In the $K$ frequency channel numbers, a length of a frequency baseline between two frequency channel numbers with a minimum length of a frequency baseline is $b_1$, and a length of a frequency baseline between two frequency channel numbers with a maximum length of a frequency baseline is $b_2$.

In this implementation, frequency baselines formed by the frequency channel numbers used for sensing in each sensing resource block are completely covered, and a quantity of frequency channel numbers required for the completely covered frequency baselines is the smallest. That is, in this implementation, the frequency baselines formed by the selected frequency channel numbers used for sensing in each sensing resource block can be completely covered, and selected frequency domain resources can be further reduced.

In an optional implementation, a length of a frequency baseline between any two adjacent candidate resource blocks in the $M_1$ candidate resource blocks is the same. It can be learned that the $M_1$ candidate resource blocks are evenly distributed, and a manner of determining the sensing resource blocks from the evenly distributed $M_1$ candidate resource blocks can reduce calculation complexity.

In an optional implementation, a length of a frequency baseline between any two adjacent frequency channel numbers in the $K$ frequency channel numbers is the same. It can be learned that the $K$ frequency channel numbers are evenly distributed, and a manner of determining the second combination from the evenly distributed K frequency channel numbers can reduce calculation complexity.

In an optional implementation, the first value is determined based on a maximum unambiguous ranging distance. Because the determined frequency baselines formed by the frequency channel numbers used for sensing includes the frequency baseline whose length is the first value, this implementation helps enable a distance that can be measured when ranging is performed based on the frequency baselines formed by the frequency channel numbers used for sensing to cover the required maximum unambiguous ranging distance.

A length of a frequency baseline between a 1st frequency channel number in the 1st candidate resource block and a $K^{th}$ frequency channel number in the $M_1^{th}$ candidate resource block in the $M_1$ candidate resource blocks is determined based on a ranging resolution. This implementation helps achieve the required ranging resolution when ranging is performed based on the frequency baselines formed by the frequency channel numbers used for sensing.

In an optional implementation, the $M_1$ candidate resource blocks are determined from $M_2$ resource blocks obtained by evenly dividing $N$ frequency channel numbers, and a length of a frequency baseline between two frequency channel numbers with a minimum length of a frequency baseline in the $N$ frequency channel numbers is the first value; and $M_1$ is less than or equal to $M_2$. A quantity of frequency channel numbers included in each of the $M_2$ resource blocks is $K$, and $M_2$ is an integer greater than 1. It indicates that the sensing resource blocks are selected from the resource blocks obtained by performing block division processing on the $N$ frequency channel numbers. This implementation helps select the frequency channel numbers used for sensing from the frequency channel numbers included in the sensing resource block, and compared with a manner of directly determining the frequency channel numbers used for sensing from the $N$ frequency channel numbers, can reduce calculation complexity.

In an optional implementation, a length of a frequency baseline between any two adjacent frequency channel numbers in the $N$ frequency channel numbers is the same. It can be learned that the $N$ frequency channel numbers are evenly distributed, and a manner of determining the $M_1$ candidate resource blocks from the evenly distributed $N$ frequency channel numbers can reduce calculation complexity.

In an optional implementation, two resource blocks that are adjacent in frequency domain in the $M_2$ resource blocks include $q$ same frequency channel numbers, where $q$ is a positive integer and $q$ is less than $K$. $N$, $M_2$, $K$, and $q$ satisfy: $N = M_2 \times K - (M_2 - 1) \times q$. This implementation helps ensure that when the $M_1$ candidate resource blocks are some resource blocks in the $M_2$ resource blocks, frequency baselines formed by all frequency channel numbers in the $M_1$ candidate resource blocks are completely covered.

In an optional implementation, $M_2$ is an odd number, and $M_1$ is equal to a value obtained by dividing a value obtained by adding 1 to $M_2$ by 2. The $M_2$ resource blocks are sorted in ascending order in frequency domain, and the $M_1$ candidate resource blocks are resource blocks sorted in odd-numbered positions in the $M_2$ resource blocks. It can be learned that $M_1$ is less than $M_2$. This implementation helps enable the quantity $M$ of sensing resource blocks determined from the $M_1$ candidate resource blocks to be less than the quantity $M_2$ of resource blocks, and reduces frequency domain resources used for transmitting the sensing signal.

In an optional implementation, the sensing signal transmission method further includes: sending frequency channel number information used for sensing; or sending position information of the $M$ sensing resource blocks in frequency domain and frequency channel number information used for sensing in one of the $M$ sensing resource blocks; or sending sensing resource indexes corresponding to the $M$ sensing resource blocks and sensing resource indexes corresponding to frequency channel numbers used for sensing in one of the $M$ sensing resource blocks. This implementation helps a receive end determine the frequency channel numbers used for sensing.

In an optional implementation, a subcarrier spacing is 30 kilohertz (kilohertz, KHz), the maximum unambiguous ranging distance is 390 meters, and the ranging resolution is 3.06 meters. The sensing resource block includes a 1st resource block and a 3rd resource block in three resource blocks obtained by evenly dividing 132 frequency channel numbers, a length of a frequency baseline between two frequency channel numbers with a minimum length of a frequency baseline in the 132 frequency channel numbers is determined based on the maximum unambiguous ranging distance, a length of a frequency baseline between a 1st frequency channel number and a 132nd frequency channel number in the 132 frequency channel numbers is determined based on the ranging resolution, and two resource blocks that are adjacent in frequency domain in the three resource blocks include three same frequency channel numbers. The frequency channel numbers used for sensing include 1st, 2nd, 4th, 7th, 14th, 21st, 28th, 35th, 39th, 42nd, 43rd, 44th, and 46th frequency channel numbers in each sensing resource block. It can be learned that the frequency channel numbers used for sensing are determined hierarchically, and complexity is low. In addition, compared with a manner of directly sending the sensing signal by using the determined 132 frequency channel numbers, this implementation enables the sensing signal to be transmitted by using a smaller quantity of frequency channel numbers, to meet a sensing requirement that the maximum unambiguous ranging distance is 390 meters and the ranging resolution is 3.06 meters.

In an optional implementation, a subcarrier spacing is 120 KHz, the maximum unambiguous ranging distance is 390 meters, and the ranging resolution is 0.8 meters. The sensing resource block includes a 1st resource block, a 3rd resource block, a 9th resource block, and a 13th resource block in 13 resource blocks obtained by evenly dividing 522 frequency channel numbers, a length of a frequency baseline between two frequency channel numbers with a minimum length of a frequency baseline in the 522 frequency channel numbers is determined based on the maximum unambiguous ranging distance, a length of a frequency baseline between a 1st frequency channel number and a 132nd frequency channel number in the 522 frequency channel numbers is determined based on the ranging resolution, and two resource blocks that are adjacent in frequency domain in the 13 resource blocks include two same frequency channel numbers. The frequency channel numbers used for sensing include 1st, 2nd, 4th, 7th, 14th, 21st, 28th, 32nd, 36th, 37th, 41st, and 42nd frequency channel numbers in each sensing resource block. It can be learned that the frequency channel numbers used for sensing are determined hierarchically, and complexity is low. In addition, compared with a manner of directly sending the sensing signal by using the determined 522 frequency channel numbers, this implementation enables the sensing signal to be transmitted by using a smaller quantity of frequency channel numbers, to meet a sensing requirement that the maximum unambiguous ranging distance is 390 meters and the ranging resolution is 0.8 meters.

According to a second aspect, an embodiment of this application provides a sensing signal transmission method. The method includes: receiving a sensing signal on frequency channel numbers used for sensing; and performing sensing based on the sensing signal, where the frequency channel numbers used for sensing are determined from $M$ sensing resource blocks. The $M$ sensing resource blocks are determined from $M_1$ candidate resource blocks, and the $M$ sensing resource blocks include a 1st candidate resource block and an $M_1^{th}$ candidate resource block in the $M_1$ candidate resource blocks; a quantity of frequency channel numbers included in each of the $M$ sensing resource blocks is $K$; and $M$, $M_1$, and $K$ are integers greater than 1, and $M$ is less than or equal to $M_1$. The frequency channel numbers used for sensing include: a 1st frequency channel number, a $K^{th}$ frequency channel number, an $i^{th}$ frequency channel number, and a $j^{th}$ frequency channel number in each of the $M$ sensing resource blocks; a length of a frequency baseline between the $i^{th}$ frequency channel number and the $j^{th}$ frequency channel number is a first value, and $i$ and $j$ are positive integers less than or equal to $K$; and a length of a frequency baseline between two frequency channel numbers is an absolute value of a frequency difference between the two frequency channel numbers. Relative positions of frequency channel numbers used for sensing in each of the $M$ sensing resource blocks are the same.

In the method, a sensing resource block used for transmitting a sensing signal is selected from candidate resource blocks, and then frequency channel numbers used for sensing are selected from frequency channel numbers included in the determined sensing resource block. It can be learned that, in the method, the frequency channel numbers used for sensing are determined hierarchically, and compared with a manner of directly selecting frequency channel numbers used for sensing from a plurality of frequency channel numbers, the method can reduce calculation complexity. In addition, the relative positions of the frequency channel numbers used for sensing in each sensing resource block are the same. Therefore, after frequency channel numbers used for sensing in one sensing resource block are determined, frequency channel numbers used for sensing in another sensing resource block may be known, which can further reduce calculation complexity.

In an optional implementation, a length of a frequency baseline between different sensing resource blocks in the $M$ sensing resource blocks is a first length; and the first length is $p \times B_1$, and $p$=1, 2, ..., and $\dfrac{B_2}{B_1}$.

A length of a frequency baseline between two sensing resource blocks is an absolute value of a frequency difference between $l^{th}$ frequency channel numbers in the two sensing resource blocks; in the $M$ sensing resource blocks, a length of a frequency baseline between two sensing resource blocks with a minimum length of a frequency baseline is $B_1$, and a length of a frequency baseline between two sensing resource blocks with a maximum length of a frequency baseline is $B_2$; and $l$ is a positive integer less than or equal to $K$.

It can be learned that, in this implementation, frequency baselines formed by the $M$ sensing resource blocks can be completely covered. When this implementation is applied to a ranging application, accuracy of performing ranging based on the completely covered frequency baselines is higher.

In an optional implementation, a length of a frequency baseline between different frequency channel numbers in the frequency channel numbers used for sensing in each sensing resource block is a second length; and the second length is $k \times b_1$, and $k$=1, 2, ..., and $\dfrac{b_2}{b_1}$.

In the frequency channel numbers used for sensing in each sensing resource block, a length of a frequency baseline between two frequency channel numbers with a minimum length of a frequency baseline is $b_1$, and a length of a frequency baseline between two frequency channel numbers with a maximum length of a frequency baseline is $b_2$; and $b_1$ is equal to the first value.

It can be learned that, in this implementation, frequency baselines formed by the frequency channel numbers used for sensing in each sensing resource block can be completely covered. When this implementation is applied to a ranging application, accuracy of performing ranging based on the completely covered frequency baselines is higher.

In an optional implementation, the $M$ sensing resource blocks are candidate resource blocks included in a first combination determined from the $M_1$ candidate resource blocks, and the first combination is a combination in which a length of a frequency baseline between different candidate resource blocks is the first length and a quantity of candidate resource blocks is the smallest. A length of a frequency baseline between two candidate resource blocks is an absolute value of a frequency difference between $l^{th}$ frequency channel numbers in the two candidate resource blocks; and in the $M_1$ candidate resource blocks, a length of a frequency baseline between two candidate resource blocks with a minimum length of a frequency baseline is $B_1$, and a length of a frequency baseline between two candidate resource blocks with a maximum length of a frequency baseline is $B_2$.

In this implementation, the $M$ sensing resource blocks with completely covered frequency baselines can be obtained, and a quantity of sensing resource blocks required for the completely covered frequency baselines can be the smallest. That is, in this implementation, the frequency baselines formed by the selected $M$ sensing resource blocks can be completely covered, and selected frequency domain resources can be further reduced.

In an optional implementation, relative positions of the frequency channel numbers used for sensing in each sensing resource block and frequency channel numbers included in a second combination are the same; and the second combination is a combination that is determined from $K$ frequency channel numbers and in which a length of a frequency baseline between different frequency channel numbers is the second length and a quantity of frequency channel numbers is the smallest. In the $K$ frequency channel numbers, a length of a frequency baseline between two frequency channel numbers with a minimum length of a frequency baseline is $b_1$, and a length of a frequency baseline between two frequency channel numbers with a maximum length of a frequency baseline is $b_2$.

In this implementation, frequency baselines formed by the frequency channel numbers used for sensing in each sensing resource block are completely covered, and a quantity of frequency channel numbers required for the completely covered frequency baselines is the smallest. That is, in this implementation, the frequency baselines formed by the selected frequency channel numbers used for sensing in each sensing resource block can be completely covered, and selected frequency domain resources can be further reduced.

In an optional implementation, a length of a frequency baseline between any two adjacent candidate resource blocks in the $M_1$ candidate resource blocks is the same. It can be learned that the $M_1$ candidate resource blocks are evenly distributed, and a manner of determining the sensing resource blocks from the evenly distributed $M_1$ candidate resource blocks can reduce calculation complexity.

In an optional implementation, a length of a frequency baseline between any two adjacent frequency channel numbers in the $K$ frequency channel numbers is the same. It can be learned that the $K$ frequency channel numbers are evenly distributed, and a manner of determining the second combination from the evenly distributed K frequency channel numbers can reduce calculation complexity.

In an optional implementation, the first value is determined based on a maximum unambiguous ranging distance. Because the determined frequency baselines formed by the frequency channel numbers used for sensing includes the frequency baseline whose length is the first value, this implementation helps enable a distance that can be measured when ranging is performed based on the frequency baselines formed by the frequency channel numbers used for sensing to cover the required maximum unambiguous ranging distance.

A length of a frequency baseline between a 1st frequency channel number in the 1st candidate resource block and a $K$th frequency channel number in the $M_1$th candidate resource block in the $M_1$ candidate resource blocks is determined based on a ranging resolution. This implementation helps achieve the required ranging resolution when ranging is performed based on the frequency baselines formed by the frequency channel numbers used for sensing.

In an optional implementation, the $M_1$ candidate resource blocks are determined from $M_2$ resource blocks obtained by evenly dividing $N$ frequency channel numbers, and a length of a frequency baseline between two frequency channel numbers with a minimum length of a frequency baseline in the $N$ frequency channel numbers is the first value; and $M_1$ is less than or equal to $M_2$. A quantity of frequency channel numbers included in each of the $M_2$ resource blocks is $K$, and $M_2$ is an integer greater than 1. It can be learned that the sensing resource blocks are selected from the resource blocks obtained by performing block division processing on the $N$ frequency channel numbers. This helps select the frequency channel numbers used for sensing from the frequency channel numbers included in the sensing resource block, and compared with a manner of directly determining the frequency channel numbers used for sensing from the N frequency channel numbers, can reduce calculation complexity.

In an optional implementation, a length of a frequency baseline between any two adjacent frequency channel numbers in the $N$ frequency channel numbers is the same. It can be learned that the $N$ frequency channel numbers are evenly distributed, and a manner of determining the $M_1$ candidate resource blocks from the evenly distributed $N$ frequency channel numbers can reduce calculation complexity.

In an optional implementation, two resource blocks that are adjacent in frequency domain in the $M_2$ resource blocks include $q$ same frequency channel numbers, where $q$ is a positive integer and $q$ is less than $K$. $N$, $M_2$, $K$, and $q$ satisfy: $N = M_2 \times K - (M_2 - 1) \times q$. This implementation helps ensure that when the $M_1$ candidate resource blocks are some resource blocks in the $M_2$ resource blocks, frequency baselines formed by all frequency channel numbers in the $M_1$ candidate resource blocks are completely covered.

In an optional implementation, $M_2$ is an odd number, and $M_1$ is equal to a value obtained by dividing a value obtained by adding 1 to $M_2$ by 2. The $M_2$ resource blocks are sorted in ascending order in frequency domain, and the $M_1$ candidate resource blocks are resource blocks sorted in odd-numbered positions in the $M_2$ resource blocks. It can be learned that $M_1$ is less than $M_2$. This implementation helps enable the quantity $M$ of sensing resource blocks determined from the $M_1$ candidate resource blocks to be less than the quantity $M_2$ of resource blocks, and reduces frequency domain resources used for transmitting the sensing signal.

In an optional implementation, the sensing signal transmission method further includes: receiving frequency channel number information used for sensing; or receiving position information of the $M$ sensing resource blocks in frequency domain and frequency channel number information used for sensing in one of the $M$ sensing resource blocks; or receiving sensing resource indexes corresponding to the $M$ sensing resource blocks and sensing resource indexes corresponding to frequency channel numbers used for sensing in one of the $M$ sensing resource blocks. This implementation helps determine the frequency channel numbers used for sensing.

In an optional implementation, a subcarrier spacing is 30 KHz, the maximum unambiguous ranging distance is 390 meters, and the ranging resolution is 3.1 meters. The sensing resource block includes a 1st resource block and a 3rd resource block in three resource blocks obtained by evenly dividing 132 frequency channel numbers, a length of a frequency baseline between two frequency channel numbers with a minimum length of a frequency baseline in the 132 frequency channel numbers is determined based on the maximum unambiguous ranging distance, a length of a frequency baseline between a 1st frequency channel number and a 132nd frequency channel number in the 132 frequency channel numbers is determined based on the ranging resolution, and two resource blocks that are adjacent in frequency domain in the three resource blocks include three same frequency channel numbers. The frequency channel numbers used for sensing include 1st, 2nd, 4th, 7th, 14th, 21st, 28th, 35th, 39th, 42nd, 43rd, 44th, and 46th frequency channel numbers in each sensing resource block. It can be learned that the frequency channel numbers used for sensing are determined hierarchically, and complexity is low. In addition, compared with a manner of directly sending the sensing signal by using the determined 132 frequency channel numbers, this implementation enables the sensing signal to be transmitted by using a smaller quantity of frequency channel numbers, to meet a sensing requirement that the maximum unambiguous ranging distance is 390 meters and the ranging resolution is 3.06 meters.

In an optional implementation, a subcarrier spacing is 120 KHz, the maximum unambiguous ranging distance is 390 meters, and the ranging resolution is 0.8 meters. The sensing resource block includes a 1st resource block, a 3rd resource block, a 9th resource block, and a 13th resource block in 13 resource blocks obtained by evenly dividing 522 frequency channel numbers, a length of a frequency baseline between two frequency channel numbers with a minimum length of a frequency baseline in the 522 frequency channel numbers is determined based on the maximum unambiguous ranging distance, a length of a frequency baseline between a 1st frequency channel number and a 132nd frequency channel number in the 522 frequency channel numbers is determined based on the ranging resolution, and two resource blocks that are adjacent in frequency domain in the 13 resource blocks include two same frequency channel numbers. The frequency channel numbers used for sensing include 1st, 2nd, 4th, 7th, 14th, 21st, 28th, 32nd, 36th, 37th, 41st, and 42nd frequency channel numbers in each sensing resource block. It can be learned that the frequency channel numbers used for sensing are determined hierarchically, and complexity is low. In addition, compared with a manner of directly sending the sensing signal by using the determined 522 frequency channel numbers, this implementation enables the sensing signal to be transmitted by using a smaller quantity of frequency channel numbers, to meet a sensing requirement that the maximum unambiguous ranging distance is 390 meters and the ranging resolution is 0.8 meters.

According to a third aspect, this application further provides a communication apparatus. The communication apparatus has a function of implementing some or all of the implementations of the first aspect, or has a function of implementing some or all of the function implementations of the second aspect. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus to perform a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit. The processing unit is configured to control the communication unit to receive and send data/signaling.

The processing unit is configured to determine frequency channel numbers used for sensing from $M$ sensing resource blocks. The communication unit is configured to send a sensing signal on the frequency channel numbers used for sensing.

The $M$ sensing resource blocks are determined from $M_1$ candidate resource blocks, and the $M$ sensing resource blocks include a 1st candidate resource block and an $M_1$th candidate resource block in the $M_1$ candidate resource blocks; a quantity of frequency channel numbers included in each of the $M$ sensing resource blocks is $K$; and $M$, $M_1$, and K are integers greater than 1, and $M$ is less than or equal to $M_1$.

The frequency channel numbers used for sensing include: a 1st frequency channel number, a $K$th frequency channel number, an $i$th frequency channel number, and a $j$th frequency channel number in each of the $M$ sensing resource blocks; a length of a frequency baseline between the $i$th frequency channel number and the $j$th frequency channel number is a first value, and $i$ and $j$ are positive integers less than or equal to $K$; and a length of a frequency baseline between two frequency channel numbers is an absolute value of a frequency difference between the two frequency channel numbers. Relative positions of frequency channel numbers used for sensing in each of the $M$ sensing resource blocks are the same.

In addition, for another optional implementation of the communication apparatus in this aspect, refer to related content of the first aspect. Details are not described herein again.

In another implementation, the communication apparatus includes a processing unit and a communication unit. The processing unit is configured to control the communication unit to receive and send data/signaling.

The communication unit is configured to receive a sensing signal on frequency channel numbers used for sensing, where the frequency channel numbers used for sensing are determined from $M$ sensing resource blocks. The processing unit is configured to perform sensing based on the sensing signal.

The $M$ sensing resource blocks are determined from $M_1$ candidate resource blocks, and the $M$ sensing resource blocks include a $1^{st}$ candidate resource block and an $M_1^{th}$ candidate resource block in the $M_1$ candidate resource blocks; a quantity of frequency channel numbers included in each of the $M$ sensing resource blocks is $K$; and $M$, $M_1$, and $K$ are integers greater than 1, and $M$ is less than or equal to $M_1$.

The frequency channel numbers used for sensing include: a $1^{st}$ frequency channel number, a $K^{th}$ frequency channel number, an $i^{th}$ frequency channel number, and a $j^{th}$ frequency channel number in each of the $M$ sensing resource blocks; a length of a frequency baseline between the $i^{th}$ frequency channel number and the $j^{th}$ frequency channel number is a first value, and $i$ and $j$ are positive integers less than or equal to $K$; and a length of a frequency baseline between two frequency channel numbers is an absolute value of a frequency difference between the two frequency channel numbers. Relative positions of frequency channel numbers used for sensing in each of the $M$ sensing resource blocks are the same.

In addition, for another optional implementation of the communication apparatus in this aspect, refer to related content of the second aspect. Details are not described herein again.

In an example, the communication unit may be a transceiver or a communication interface, the storage unit may be a memory, and the processing unit may be a processor. The processor may be configured to perform the method in the first aspect or the second aspect by using a logic circuit or by running a computer program, the transceiver may be configured to receive and send a signal, and the memory may be configured to store the computer program.

In an implementation, the communication apparatus includes a processor and a transceiver. The processor is configured to determine frequency channel numbers used for sensing from $M$ sensing resource blocks. The transceiver is configured to send a sensing signal on the frequency channel numbers used for sensing.

The $M$ sensing resource blocks are determined from $M_1$ candidate resource blocks, and the $M$ sensing resource blocks include a $1^{st}$ candidate resource block and an $M_1^{th}$ candidate resource block in the $M_1$ candidate resource blocks; a quantity of frequency channel numbers included in each of the $M$ sensing resource blocks is $K$; and $M$, $M_1$, and $K$ are integers greater than 1, and $M$ is less than or equal to $M_1$.

The frequency channel numbers used for sensing include: a $1^{st}$ frequency channel number, a $K^{th}$ frequency channel number, an $i^{th}$ frequency channel number, and a $j^{th}$ frequency channel number in each of the $M$ sensing resource blocks; a length of a frequency baseline between the $i^{th}$ frequency channel number and the $j^{th}$ frequency channel number is a first value, and $i$ and $j$ are positive integers less than or equal to $K$; and a length of a frequency baseline between two frequency channel numbers is an absolute value of a frequency difference between the two frequency channel numbers. Relative positions of frequency channel numbers used for sensing in each of the $M$ sensing resource blocks are the same.

In addition, for another optional implementation of the communication apparatus in this aspect, refer to related content of the first aspect. Details are not described herein again.

In another implementation, the communication apparatus includes a processor and a transceiver. The transceiver is configured to receive a sensing signal on frequency channel numbers used for sensing, where the frequency channel numbers used for sensing are determined from $M$ sensing resource blocks. The processor is configured to perform sensing based on the sensing signal.

The $M$ sensing resource blocks are determined from $M_1$ candidate resource blocks, and the $M$ sensing resource blocks include a $1^{st}$ candidate resource block and an $M_1^{th}$ candidate resource block in the $M_1$ candidate resource blocks; a quantity of frequency channel numbers included in each of the $M$ sensing resource blocks is $K$; and $M$, $M_1$, and $K$ are integers greater than 1, and $M$ is less than or equal to $M_1$.

The frequency channel numbers used for sensing include: a $1^{st}$ frequency channel number, a $K^{th}$ frequency channel number, an $i^{th}$ frequency channel number, and a $j^{th}$ frequency channel number in each of the $M$ sensing resource blocks; a length of a frequency baseline between the $i^{th}$ frequency channel number and the $j^{th}$ frequency channel number is a first value, and $i$ and $j$ are positive integers less than or equal to $K$; and a length of a frequency baseline between two frequency channel numbers is an absolute value of a frequency difference between the two frequency channel numbers. Relative positions of frequency channel numbers used for sensing in each of the $M$ sensing resource blocks are the same.

In addition, for another optional implementation of the communication apparatus in this aspect, refer to related content of the second aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of integrated circuit technologies, more components may be integrated on a same chip. For example, the digital baseband processor and a plurality of application processors (for example, but not limited to, a graphics processing unit and a multimedia processor) may be integrated on a same chip. Such a chip may be referred to as a system-on-a-chip (System-on-a-Chip, SoC). Whether the components are separately disposed on different chips or integrated and disposed on one or more chips usually depends on a requirement of a product design. Embodiments of this application impose no limitation on specific implementations of the foregoing components.

According to a fourth aspect, this application further provides a processor, configured to perform the foregoing methods. In a process of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to the transceiver, so that the transceiver transmits the signal. After the foregoing signal is output by the processor, other processing may further need to be performed on the signal, and then the signal arrives at the transceiver. Similarly, when the processor receives the input signal, the transceiver receives the signal, and inputs the signal into the processor. Further, after the transceiver receives the signal, other processing may further need to be performed on the signal, and then the signal is input to the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations such as sending and receiving directly performed by a radio frequency circuit and an antenna.

In an implementation process, the processor may be a processor specially configured to perform these methods, or may be a processor, for example, a general-purpose processor, that executes computer instructions in the memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

According to a fifth aspect, this application further provides a communication system. The system includes at least one first device in the foregoing aspects. In another possible design, the system includes at least one first device and at least one second device in the foregoing aspects. In still another possible design, the system may further include another device that is in the solutions provided in this application and that interacts with the first device and/or the second device.

According to a sixth aspect, this application provides a computer-readable storage medium, configured to store instructions. When the instructions are run by a computer, the method according to the first aspect or the second aspect is performed.

According to a seventh aspect, this application further provides a computer program product including instructions. When the computer program product runs on a computer, the method according to the first aspect or the second aspect is performed.

According to an eighth aspect, this application provides a chip system. The chip system includes a processor and an interface, the interface is configured to obtain a program or instructions, and the processor is configured to invoke the program or the instructions to implement a function in the first aspect, or is configured to invoke the program or the instructions to implement a function in the second aspect. In a possible design, the chip system further includes a memory. The memory is configured to store program instructions and data that are necessary for a terminal. The chip system may include a chip, or may include a chip and another discrete component.

**BRIEF DESCRIPTION OF DRAWINGS**

FIG. 1 is a diagram of a structure of a communication system according to an embodiment of this application;
FIG. 2a is a diagram of an application scenario according to an embodiment of this application;
FIG. 2b is a diagram of another application scenario according to an embodiment of this application;
FIG. 2c is a diagram of another application scenario according to an embodiment of this application;

FIG. 2d is a diagram of another application scenario according to an embodiment of this application;
FIG. 2e is a diagram of another application scenario according to an embodiment of this application;
FIG. 3a is a diagram of another application scenario according to an embodiment of this application;
FIG. 3b is a diagram of another application scenario according to an embodiment of this application;
FIG. 4a is a diagram of a frequency channel number combination according to an embodiment of this application;
FIG. 4b is a diagram of a frequency baseline and a redundancy amount of a frequency baseline according to an embodiment of this application;
FIG. 4c is a diagram of another frequency baseline and a redundancy amount of another frequency baseline according to an embodiment of this application;
FIG. 5 is an interaction diagram of a sensing signal transmission method according to an embodiment of this application;
FIG. 6 is a diagram of a frequency domain resource distribution according to an embodiment of this application;
FIG. 7 is a diagram of another frequency domain resource distribution according to an embodiment of this application;
FIG. 8 is a diagram of another frequency domain resource distribution according to an embodiment of this application;
FIG. 9 is a diagram of another frequency domain resource distribution according to an embodiment of this application;
FIG. 10 is a diagram of another frequency domain resource distribution according to an embodiment of this application;
FIG. 11a is a diagram of another frequency domain resource distribution according to an embodiment of this application;
FIG. 11b is a diagram of another frequency domain resource distribution according to an embodiment of this application;
FIG. 12 is a diagram of another frequency domain resource distribution according to an embodiment of this application;
FIG. 13 is a diagram of a process of determining frequency channel numbers used for sensing according to an embodiment of this application;
FIG. 14 is an interaction diagram of another sensing signal transmission method according to an embodiment of this application;
FIG. 15 is a diagram of a structure of a communication apparatus according to an embodiment of this application;
FIG. 16 is a diagram of a structure of another communication apparatus according to an embodiment of this application; and
FIG. 17 is a diagram of a structure of a chip according to an embodiment of this application.

## DESCRIPTION OF EMBODIMENTS

The following clearly and completely describes the technical solutions in embodiments of this application with reference to the accompanying drawings in embodiments of this application.

To better understand a sensing signal transmission method disclosed in embodiments of this application, a communication system to which embodiments of this application are applicable is described.

Embodiments of this application may be applied to a 4th generation (4th generation, 4G) communication system such as a long term evolution (long term evolution, LTE) system, or a 5th generation (5th generation, 5G) communication system such as a new radio (new radio, NR) system, and may be further applied to a short-range communication system such as a wireless fidelity (wireless fidelity, Wi-Fi) system, a communication system that supports convergence of a plurality of wireless technologies, or a communication system that is evolved after 5G such as a 6th generation (6th generation, 6G) communication system. In embodiments of this application, a wireless communication system includes but is not limited to three application scenarios of a narrowband internet of things (narrowband internet of things, NB-IoT) system, the LTE system, and the 5G mobile communication system: enhanced mobile broadband (enhanced mobile broadband, eMBB), ultra-reliable low-latency communication (ultra-reliable low-latency communication, URLLC), and massive machine-type communications (massive machine-type communications, mMTC).

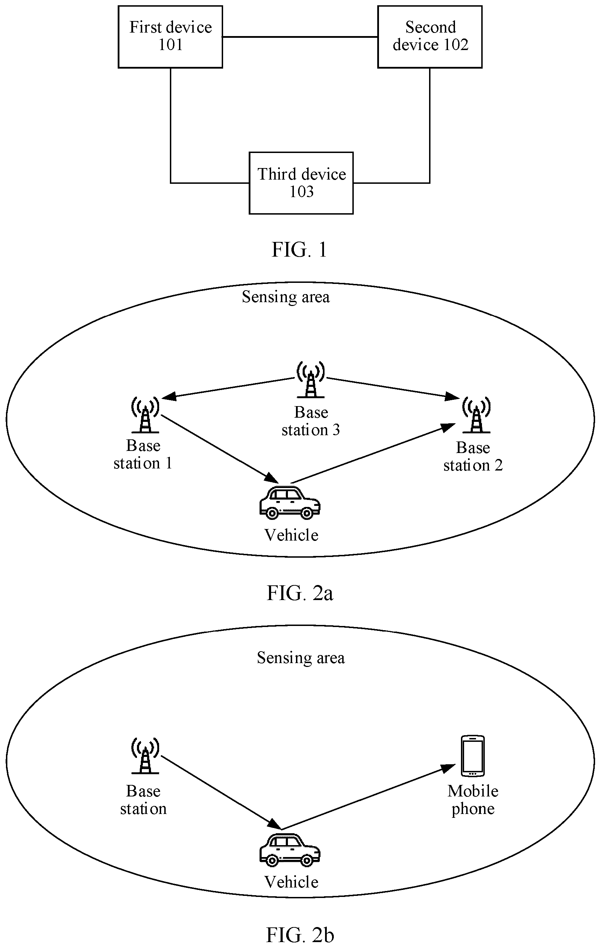

FIG. 1 is a diagram of a structure of a communication system according to an embodiment of this application. The communication system includes but is not limited to one first device 101, one second device 102, and one third device 103. Quantities of devices and forms of the devices shown in FIG. 1 are used as an example, and do not constitute a limitation on this embodiment of this application. In actual application, two or more first devices 101, two or more second devices 102, and two or more third devices 103 may be included. Any one of the first device 101, the second device 102, and the third device 103 may be a network device, or may be a terminal device. In addition, the first device 101 may also be referred to as a transmit node, the second device 102 may also be referred to as a receive node, and the third device 103 may also be referred to as a control node.

The first device 101 may be configured to: determine frequency channel numbers used for sensing from $M$ sensing resource blocks, and send a sensing signal on the frequency channel numbers used for sensing. The second device 102 may be configured to: receive a sensing signal on the frequency channel numbers used for sensing, and perform sensing based on the sensing signal. The sensing signal received by the second device 102 is obtained after the sensing signal sent by the first device passes through a channel between the first device 101 and a sensing object, is reflected by the sensing object, and passes through a channel between the sensing object and the second device 102. The third device 103 may be configured to send a trigger signal to the second device 102, where the trigger signal may be used to trigger the second device 102 to enable a sensing function. Optionally, the frequency channel numbers used for sensing may be determined by the first device 101 based on a ranging resolution and a maximum unambiguous ranging distance. In this case, the third device 103 may be further configured to: determine the ranging resolution and the maximum unambiguous ranging distance based on a sensing requirement, and send the ranging resolution and the maximum unambiguous ranging distance to the first device 101. For example, with reference to FIG. 2a, the sensing object is a vehicle, the first device 101, the second device 102, and the third device 103 are a base station 1, a base station 2, and a base station 3 respectively, and the base station 2 may sense the vehicle based on a received sensing signal from the base station 1.

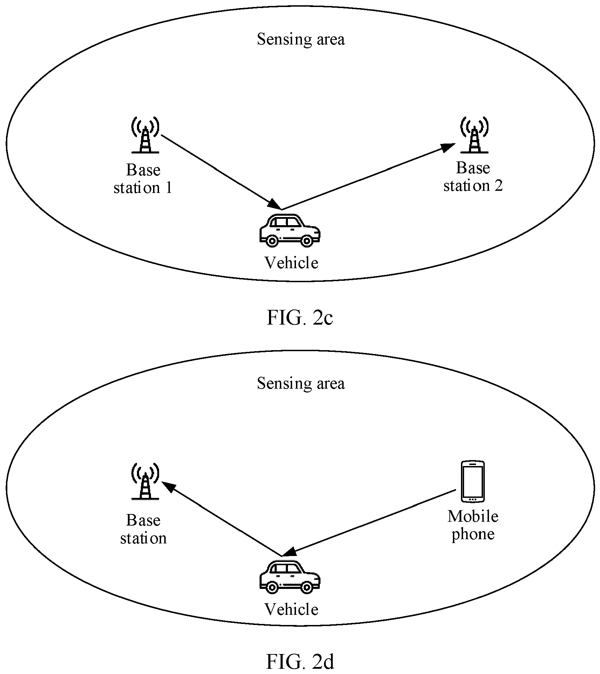

In addition, the communication system shown in FIG. 1 may not include the third device 103, and a function performed by the third device 103 may be performed by the first device 101 or the second device 102. When the function performed by the third device 103 is performed by the first device 101, the first device 101 may be configured to: determine frequency channel numbers used for sensing from $M$ sensing resource blocks, and send a sensing signal on the frequency channel numbers used for sensing. The first device 101 may be further configured to send a trigger signal to the second device 102. Optionally, the frequency channel numbers used for sensing may be determined based on a ranging resolution and a maximum unambiguous ranging distance. In this case, the first device 101 may be further configured to determine the ranging resolution and the maximum unambiguous ranging distance based on a sensing requirement. For a function of the second device 102, refer to related descriptions of the second device 102 in the communication system shown in FIG. 1. Details are not described again. For example, with reference to FIG. 2b, the sensing object is a vehicle, the first device 101 is a base station, the second device 102 is a mobile phone, and the base station further has a function of the third device 103. It can be learned that the mobile phone may sense the vehicle based on a downlink signal sent by the base station. For another example, with reference to FIG. 2c, the sensing object is a vehicle, the first device 101 and the second device 102 are a base station 1 and a base station 2 respectively, and the base station 1 further has a function of the third device 103. It can be learned that the base station 2 may sense the vehicle based on a received sensing signal from the base station 1.

When a function performed by the third device 103 is performed by the second device 102, the second device 102 may be configured to: receive a sensing signal on frequency channel numbers used for sensing, and perform sensing based on the sensing signal. Optionally, when the frequency channel numbers used for sensing are determined by the first device 101 based on ranging resolution and a maximum unambiguous ranging distance, the second device 102 may be further configured to: determine the ranging resolution and the maximum unambiguous ranging distance based on a sensing requirement, and send the ranging resolution and the maximum unambiguous ranging distance to the first device 101. For a function of the first device 101, refer to related descriptions of the first device 101 in the communication system shown in FIG. 1. Details are not described again. For example, with reference to FIG. 2d, the sensing object is a vehicle, the first device 101 is a mobile phone, the second device 102 is a base station, and the base station further has a function of the third device 103. It can be learned that the base station may sense the vehicle based on an uplink signal sent by the mobile phone.

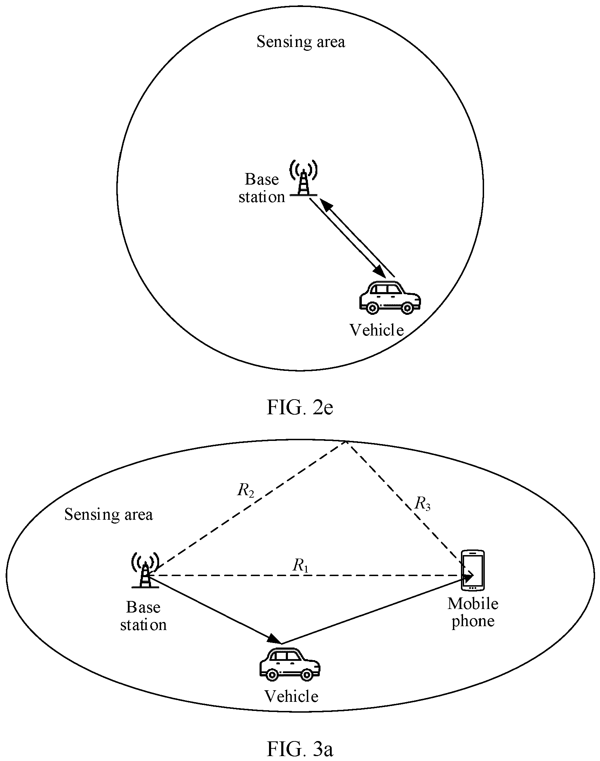

The communication system shown in FIG. 1 may not include the second device 102 and the third device 103, and functions performed by the second device 102 and the third device 103 may both be performed by the first device 101. In this case, the first device 101 may be configured to: determine frequency channel numbers used for sensing from $M$ sensing resource blocks, and send a sensing signal on the frequency channel numbers used for sensing. The first device 101 may be further configured to: receive a sensing signal, and perform sensing based on the received sensing signal. The sensing signal received by the first device 101 is obtained after the sensing signal sent by the first device 101 passes through a channel between the first device 101 and a sensing object, is reflected by the sensing object, and passes through a channel between the sensing object and the first device 101. Optionally, the frequency channel numbers used for sensing may be determined based on ranging resolution and a maximum unambiguous ranging distance. In this case, the first device 101 may be further configured to determine the ranging resolution and the maximum unambiguous ranging distance based on a sensing requirement. For example, with reference to FIG. 2e, the sensing object is a vehicle, the first device 101 is a base station, and the first device 101 further has functions of the second device 102 and the third device 103.

In addition, in embodiments of this application, the sensing signal transmission method is described by using an example in which a frequency represents a frequency resource. Actually, a subcarrier may further represent a frequency resource. In embodiments of this application, when a subcarrier represents a frequency resource, a frequency of any subcarrier may be represented by a frequency of a start position of the subcarrier in frequency domain. For example, a subcarrier is a frequency band whose frequencies are $f_1$ to $f_2$, and a frequency of the subcarrier is $f_1$. In addition, a frequency of any subcarrier may alternatively be represented by a frequency of the subcarrier at a position other than a start position in frequency domain, for example, represented by a frequency of the subcarrier at an end position in frequency domain. This is not limited.

In embodiments of this application, the network device is a device having a wireless transceiver function, and may be an evolved NodeB (evolved NodeB, eNB or eNodeB) in LTE, a base station (for example, a next generation NodeB (next generation NodeB, gNB)) in a 5G network, a base station in a future evolved public land mobile network (public land mobile network, PLMN), a broadband network service gateway (broadband network gateway, BNG), an aggregation switch, a non-3rd generation partnership project (3rd generation partnership project, 3GPP) access device, or the like. Optionally, the network device in embodiments of this application may include various forms of base stations, for example, a macro base station, a micro base station (also referred to as a small cell), a relay station, an access point, a device that implements a base station function in a communication system evolved after 5G, an access node in a Wi-Fi system, a transmission reception point (transmitting and receiving point, TRP), a transmission point (transmitting point, TP), a mobile switching center, and a device that undertakes the base station function in device-to-device (device-to-device, D2D), vehicle-to-everything (vehicle-to-everything, V2X), and machine-to-machine (M2M) communication; and may further include a central unit (central unit, CU) and a distributed unit (distributed unit, DU) in a cloud access network (cloud radio access network, C-RAN) system, and a network device in a non-terrestrial network (non-terrestrial network, NTN) communication system, that is, may be deployed on a high-altitude platform or a satellite. This is not specifically limited in embodiments of this application.

The terminal device may include various handheld devices, vehicle-mounted devices, wearable devices, or computing devices that have a wireless communication function, or other processing devices connected to a wireless modem. The terminal device may alternatively be a user equipment (user equipment, UE), an access terminal, a customer premises equipment (customer premises equipment, CPE), a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, a communication device mounted on a high-altitude aircraft, a wearable device, an unmanned aerial vehicle, a robot, a smart point of sale (point of sale, POS) terminal, a terminal in D2D, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a terminal device in a communication network evolved after 5G, or the like. This is not limited in this application.

In embodiments disclosed in this application, each aspect, embodiment, or feature of this application is presented by describing a system including a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

To better understand the sensing signal transmission method disclosed in embodiments of this application, related concepts in embodiments of this application are briefly described.

1. Frequency baseline

The frequency baseline is obtained by subtracting one frequency from the other frequency. A length of the frequency baseline is an absolute value of a difference between the two frequencies.

For two frequency channel numbers, a frequency baseline between the two frequency channel numbers is obtained by subtracting a frequency of one frequency channel number from a frequency of the other frequency channel number. A length of the frequency baseline between the two frequency channel numbers is an absolute value of a frequency difference between the two frequency channel numbers. In addition, frequency baselines formed by a plurality of frequency channel numbers include a frequency baseline between two different frequency channel numbers in the plurality of frequency channel numbers and a frequency baseline between each frequency channel number and the frequency channel number.

For example, for two frequency channel numbers whose frequencies are respectively $f_i$ and $f_j$, a frequency baseline formed by the two frequency channel numbers includes: a frequency baseline $b_{ij} = f_i - f_j$, a frequency baseline $b_{ji} = f_j - f_i$, a frequency baseline $b_{ii} = f_i - f_i = 0$, and a frequency baseline $b_{jj} = f_j - f_j = 0$. Lengths of $b_{ij}$ and $b_{ji}$ are the same, and are both an absolute value of a difference between $f_i$ and $f_j$, that is, $|b_{ij}| = |b_{ji}| = |f_i - f_j|$.

For two resource blocks including a same quantity of frequency channel numbers, a frequency baseline between the two resource blocks is obtained by subtracting a frequency of an $l^{th}$ frequency channel number in one resource block from a frequency of an $l^{th}$ frequency channel number in the other resource block, and a length of the frequency baseline between the two resource blocks is an absolute value of a frequency difference between the $l^{th}$ frequency channel number in the one resource block and the $l^{th}$ frequency channel number in the other resource block. $l$ is an integer greater than or equal to 1, and $l$ is less than or equal to a quantity of frequency channel numbers included in a resource block. In addition, frequency baselines formed by a plurality of resource blocks include a frequency baseline between two different resource blocks in the plurality of resource blocks and a frequency baseline between each resource block and the resource block.

For example, a frequency baseline formed by a resource block 1 and a resource block 2 includes: a frequency baseline $b_{12} = f_{1l} - f_{2l}$, a frequency baseline $b_{21} = f_{2l} - f_{1l}$, a frequency baseline $b_{11} = f_{1l} - f_{1l} = 0$, and a frequency baseline $b_{22} = f_{2l} - f_{2l} = 0$, where $f_{1l}$ is a frequency of an $l^{th}$ frequency channel number in the resource block 1, and $f_{2l}$ is a frequency of an $l^{th}$ frequency channel number in the resource block 2. Lengths of $b_{12}$ and $b_{21}$ are the same, and are both an absolute value of a difference between $f_{1l}$ and $f_{2l}$, that is, $|b_{12}| = |b_{21}| = |f_{1l} - f_{2l}|$.

An $l^{th}$ frequency channel number in a resource block is a frequency channel number arranged in an $l^{th}$ position in all frequency channel numbers included in the resource block in ascending order of frequencies. The $l^{th}$ frequency channel number in the resource block may be any frequency channel number in the resource block. In addition, a manner of arranging all the frequency channel numbers included in the resource block is not limited in embodiments of this application. For example, the frequency channel numbers may alternatively be arranged in descending order of frequencies. In embodiments of this application, the manner of arranging the frequency channel numbers in ascending order is used as an example.

2. Frequency baseline and ranging application

The frequency baseline can be used in the ranging application. In a scenario in which wireless sensing and wireless communication are integrated, ranging may be implemented by transmitting a sensing signal on frequency channel numbers in the ranging application. Specifically, in the ranging application, ranging may be implemented based on a relative phase relationship of the sensing signal between different frequency channel numbers, and the relative phase relationship may be represented by a frequency baseline.

For example, a transmitting end sends the sensing signal on $N$ frequency channel numbers whose frequencies are $f_1, f_2, ..., $ and $f_N$, and a receiving end receives the sensing signal after a delay $\tau$ from sending time. Compared with the sensing signal sent by the transmitting end, a phase that is of the sensing signal received by the receiving end and that is on each frequency channel number changes. For example, a magnitude of a phase change of the sensing signal on a frequency channel number whose frequency is $f_i$ may be represented as $2\pi f_i \tau$, where $i$ is an integer greater than or equal to 1 and less than or equal to $N$. It can be learned that, in a case of a same delay $\tau$, phase changes of the sensing signal on different frequency channel numbers are different. In the ranging application, ranging may be performed based on a phase change difference of the sensing signal between different frequency channel numbers, for example, a phase change difference $\Delta\phi_{ij} = 2\pi (f_i - f_j)\tau$ between a phase change of the sensing signal on a frequency channel number whose frequency is $f_i$ and a phase change of the sensing signal on a frequency channel number whose frequency is $f_j$, where both $i$ and $j$ are integers greater than or equal to 1 and less than or equal to $N$. It can be learned that the phase change difference may be represented by a frequency baseline.

3. Frequency baseline redundancy

The frequency baseline redundancy indicates that at least two same frequency baselines exist, for example, a frequency baseline $b_{12} = f_1 - f_2$, and a frequency baseline $b_{34} = f_3 - f_4$. If $f_1 - f_2 = f_3 - f_4$, it indicates that $b_{12}$ and $b_{34}$ are two same frequency baselines. That is, the frequency baseline redundancy exists.

When a frequency baseline is applied to a ranging application, ranging results obtained by performing ranging based on a phase change difference represented by same frequency baselines are the same. For example, a sensing signal is transmitted on three frequency channel numbers whose frequencies are $f_1, f_2,$ and $f_3$ respectively, where $f_2 - f_1 = f_3 - f_2$. It can be learned that a frequency baseline $b_{21} = f_2 - f_1$ is the same as a frequency baseline $b_{32} = f_3 - f_2$, which indicates that the frequency baseline redundancy exists, and ranging results obtained by performing ranging by using a phase change difference represented by the frequency baseline $b_{21}$ and the frequency baseline $b_{32}$ are the same. For $N$ frequency channel numbers whose frequencies are $f_1, f_2, ..., $ and $f_N$, there are a total of $N(N-1)$ frequency baselines between two different frequency channel numbers in the $N$ frequency channel numbers. In the $N(N-1)$ frequency baselines, some frequency baselines have redundancy, and a quantity of non-redundant frequency baselines is less than $N(N-1)$.

4. Complete frequency baseline coverage

For $N_1$ frequency channel numbers in $N$ frequency channel numbers whose frequencies are $f_1, f_2, ..., $ and $f_N$, if a length of a frequency baseline between two different frequency channel numbers in the $N_1$ frequency channel numbers is

$n \times |b_{min}|, n=1, 2, ...,$ and $\dfrac{|b_{max}|}{|b_{min}|}$, it indicates that frequency baselines formed by the $N_1$ frequency channel numbers are completely covered. $\dfrac{|b_{max}|}{|b_{min}|}$ is an integer greater than 1, $|b_{min}|$ is a length of a frequency baseline between two frequency channel numbers with a minimum length of a frequency baseline in the N frequency channel numbers, and $|b_{max}|$ is a length of a frequency baseline between two frequency channel numbers with a maximum length of a frequency baseline in the N frequency channel numbers.

For $N_1$ resource blocks in $N$ resource blocks, if a length of a frequency baseline between two different resource blocks in the $N_1$ resource blocks is $n \times |B_{min}|$, and $n=1, 2, ...,$ and $\dfrac{|B_{max}|}{|B_{min}|}$, it indicates that frequency baselines formed by the $N_1$ resource blocks are completely covered. $\dfrac{|B_{max}|}{|B_{min}|}$ is an integer greater than 1, $|B_{min}|$ is a length of a frequency baseline between two resource blocks with a minimum length of a frequency baseline in the $N$ resource blocks, and $|B_{max}|$ is a length of a frequency baseline between two resource blocks with a maximum length of a frequency baseline in the $N$ resource blocks.

5. Ranging resolution

The ranging resolution is a minimum distance that distinguishes between two same sensing objects in distance. The two same sensing objects may be two sensing objects that have a same size, volume, material, and the like. A smaller value of the ranging resolution indicates a higher ranging resolution and higher ranging accuracy.

A ranging resolution for performing ranging based on a frequency baseline with a larger length is greater than a ranging resolution for performing ranging based on a frequency baseline with a smaller length. The lengths of the two frequency baselines are relative herein. For example, a sensing signal is transmitted on $N$ frequency channel numbers whose frequencies are $f_1, f_2, ...,$ and $f_N$, where $f_1, f_2, ...,$ and $f_N$ are arranged in ascending order of frequencies. In the $N$ frequency channel numbers, a frequency baseline with a minimum length includes a frequency baseline $b_{21} = f_2 - f_1$, and a phase change difference corresponding to the frequency baseline $b_{21}$ is $\Delta\phi_{21} = 2\pi b_{21}\tau$, and a frequency baseline with a maximum length is a frequency baseline $b_{N1} = f_N - f_1$, and a phase change difference corresponding to the frequency baseline $b_{N1}$ is $\Delta\phi_{N1} = 2\pi b_{N1}\tau$, where $\tau$ is a delay, that is, an absolute value of a difference between time when a receiving end receives the sensing signal and time when a transmitting end sends the sensing signal. When the delay changes by $\Delta\tau$, that is, $\tau$ changes to $\tau+\Delta\tau$, $\Delta\phi_{21}$ changes to $2\pi b_{21}(\tau + \Delta\tau)$, and $\Delta\phi_{N1}$ changes to $2\pi b_{N1}(\tau + \Delta\tau)$. It can be learned that, because $b_{N1}$ is greater than $b_{21}$, a change of $\Delta\phi_{N1}$ is greater than a change of $\Delta\phi_{21}$, which indicates that compared with a frequency baseline with a smaller length, a frequency baseline with a larger length is more sensitive to a change of a delay, so that a ranging resolution for performing ranging based on the frequency baseline with the larger length is higher.

6. Maximum unambiguous ranging distance

The maximum unambiguous ranging distance is a maximum value of an unambiguous ranging distance. The unambiguous ranging distance is a distance range of a sensing object that can be measured.

When the communication system shown in FIG. 1 includes a first device and a second device, a sum of a distance between any point in a sensing area represented by an unambiguous ranging distance and the first device and a distance between the point and the second device is less than a maximum unambiguous ranging distance, and a sum of a distance between any point on an edge of the sensing area and the first device and a distance between the point and the second device is equal to the maximum unambiguous ranging distance. Using the scenario shown in FIG. 2b as an example, with reference to FIG. 3a, the sensing area is an elliptic area formed by using a base station and a mobile phone as a focus, a shortest distance between the base station and the mobile phone is $R_1$, a sum of a distance between any point on the ellipse and the base station and a distance between the point and the mobile phone is $R_2+R_3$, the unambiguous ranging distance is a range from $R_1$ to $R_2+R_3$, and the maximum unambiguous ranging distance is $R_2+R_3$.

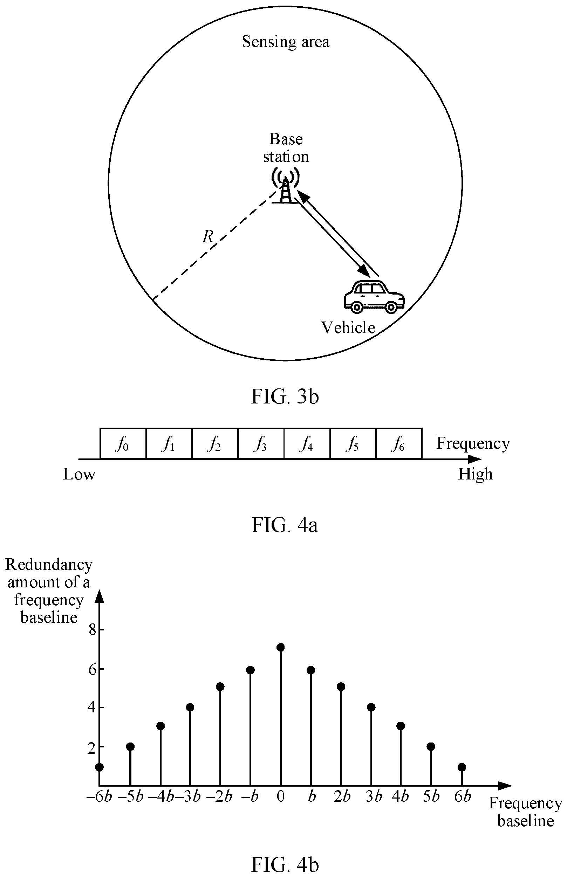

When the communication system shown in FIG. 1 includes a first device but does not include a second device, and a function of the second device is performed by the first device, a value obtained by multiplying a distance from any point in a sensing area represented by an unambiguous ranging distance to the first device by 2 is less than a maximum unambiguous ranging distance, and a value obtained by multiplying a distance from any point on an edge of the sensing area to the first device by 2 is equal to the maximum unambiguous ranging distance. Using the scenario shown in FIG. 2e as an example, with reference to FIG. 3b, the sensing area is a circular area by using a base station as a center and $R$ as a radius, the unambiguous ranging distance is a range from 0 to $2R$, and the maximum unambiguous ranging distance is $2R$.

A maximum unambiguous ranging distance for performing ranging based on a frequency baseline with a smaller length is greater than a maximum unambiguous ranging distance for performing ranging based on a frequency baseline with a larger length. The lengths of the two frequency baselines are relative herein. In a ranging application, when a phase change difference of a sensing signal on two frequency channel numbers exceeds a range from 0 to $2\pi$, ranging performed based on the phase change difference is blurred. For example, when a detected phase is $\dfrac{\pi}{3}$, an actual phase change difference may be $2k\pi + \dfrac{\pi}{3}$, where $k$ is an integer. It can be learned that uncertainty of the actual phase change difference causes blurred ranging. In this case, to ensure that ranging is not blurred, the phase change difference needs to be less than $2\pi$, that is, $2\pi b\tau < 2\pi$, and further $\tau < \dfrac{1}{|b|}$ needs to be satisfied, where $|b|$ is a length of a frequency baseline, and $\tau$ is a delay, that is, an absolute value of a difference between time when a receiving end receives the sensing signal and time when a transmitting end sends the sensing signal. It can be learned that a smaller value of $|b|$ indicates a larger value of $\tau$ and a larger maximum unambiguous ranging distance, that is, a larger maximum unambiguous ranging distance for performing ranging based on a frequency baseline with a smaller length.

7. Evenly distributed frequency channel numbers and evenly distributed resource blocks

A plurality of evenly distributed frequency channel numbers satisfy the following: The plurality of frequency channel numbers are arranged in ascending or descending order of frequencies, and an absolute value of a frequency difference between any two frequency channel numbers arranged in adjacent positions is the same, that is, a length of a frequency baseline between any two frequency channel numbers arranged in adjacent positions is the same. For example, frequencies of four frequency channel numbers arranged in ascending order of frequencies are $f_1$, $f_2$, $f_3$, and $f_4$ respectively, where $f_2 - f_1 = f_3 - f_2 = f_4 - f_3$, which indicates that the four frequency channel numbers are evenly distributed.

A plurality of evenly distributed resource blocks satisfy the following: The plurality of resource blocks include a same quantity of frequency channel numbers, and the plurality of resource blocks and a plurality of frequency channel numbers included in each resource block are arranged in ascending or descending order. An absolute value of a frequency difference between $l^{th}$ frequency channel numbers in any two resource blocks arranged in adjacent positions is the same, that is, a length of a frequency baseline between any two resource blocks arranged in adjacent positions is the same. $l$ is an integer greater than or equal to 1, and $l$ is less than or equal to a quantity of frequency channel numbers included in each resource block.

For example, three resource blocks arranged in ascending order of frequencies are respectively a resource block 1, a resource block 2, and a resource block 3. Two frequency channel numbers included in the resource block 1 are arranged in ascending order as follows: a frequency channel number whose frequency is $f_1$ and a frequency channel number whose frequency is $f_2$. Two frequency channel numbers included in the resource block 2 are arranged in ascending order as follows: a frequency channel number whose frequency is $f_3$ and a frequency channel number whose frequency is $f_4$. Two frequency channel numbers included in the resource block 3 are arranged in ascending order as follows: a frequency channel number whose frequency is $f_5$ and a frequency channel number whose frequency is $f_6$. $f_3 - f_1 = f_5 - f_3$, and $f_4 - f_2 = f_6 - f_4$, which indicates that the three resource blocks are evenly distributed.

In addition, in embodiments of this application, evenly distributed sensing resource blocks and evenly distributed candidate resource blocks are similar to the evenly distributed resource blocks, and details are not described.

In a ranging application, a sensing signal may be transmitted on a frequency domain resource, so as to implement ranging on a sensing object when a receiving end and a transmitting end communicate with each other, thereby implementing integration of wireless communication and wireless sensing.

In one manner, the sensing signal is transmitted by using evenly distributed frequency channel numbers. In this case, if a relatively large maximum unambiguous ranging distance and a relatively high ranging resolution are required, a relatively large quantity of frequency channel numbers need to be used to transmit the sensing signal, but using a relatively large quantity of frequency domain resources affects communication performance. In addition, if the sensing signal is transmitted by using the evenly distributed frequency channel numbers, a relatively large quantity of frequency baselines in frequency baselines formed by these frequency channel numbers have redundancy, which wastes frequency domain resources. For example, with reference to FIG. 4a, the sensing signal is transmitted on seven evenly distributed frequency channel numbers, which are arranged in ascending order of frequencies. The frequencies of the six frequency channel numbers are $f_0$, $f_1$, $f_2$, $f_3$, $f_4$, $f_5$, and $f_6$ respectively, where a length of a frequency baseline between two frequency channel numbers arranged in adjacent positions is $b$. Frequency baselines formed by the six frequency channel numbers and a redundancy amount of each frequency baseline are shown in FIG. 4b. It can be learned that the frequency baselines formed by the seven frequency channel numbers have redundancy other than the two frequency baselines -6$b$ and 6$b$.

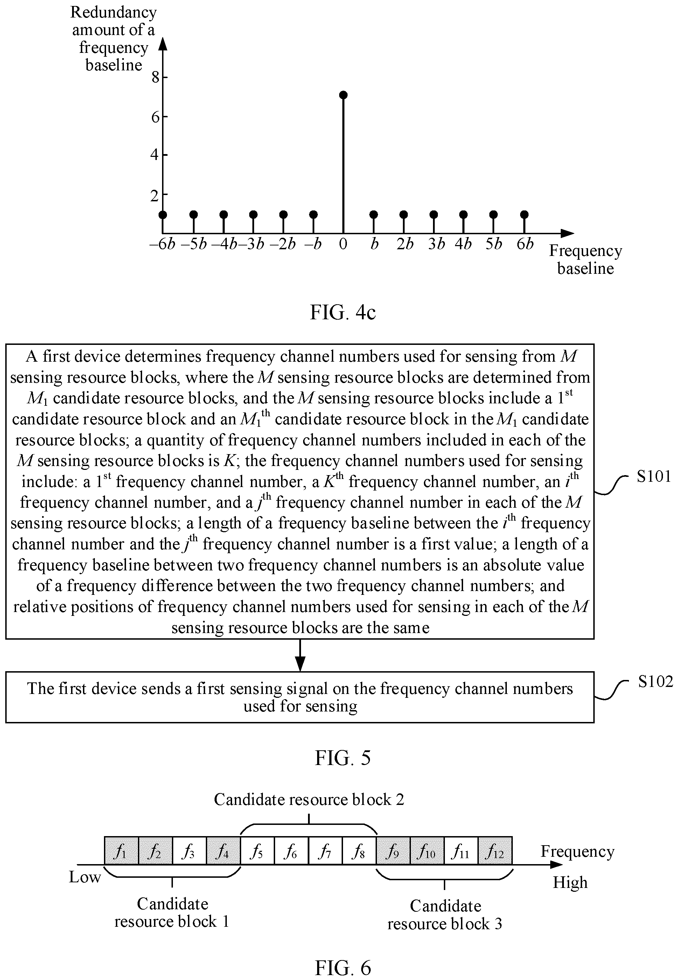

In another manner, the sensing signal is transmitted by using non-evenly distributed frequency channel numbers. For example, the sensing signal is transmitted by using four frequency channel numbers whose frequencies are $f_0$, $f_1$, $f_4$, and $f_6$ in a frequency channel number combination shown in FIG. 4a. Frequency baselines formed by the four frequency channel numbers and a redundancy amount of each frequency baseline are shown in FIG. 4c. It can be learned that a length of a frequency baseline between two different frequency channel numbers in the four frequency channel numbers is $ib$, where $i$=1, 2, 3, 4, 5, and 6. The frequency baselines formed by the four frequency channel numbers are completely covered, but the frequency baselines formed by the four frequency channel numbers have no redundancy other than the frequency baseline 0. It can be learned that, compared with the manner of transmitting the sensing signal by using the evenly distributed frequency channel numbers, the manner of transmitting the sensing signal by using the non-evenly distributed frequency channel numbers can reduce used frequency resources. A specific manner is to determine, from a plurality of evenly distributed frequency channel numbers, a frequency channel number combination in which a quantity of frequency channel numbers is the smallest and frequency baselines are completely covered, and transmit the sensing signal by using the determined frequency channel number combination. However, in this manner, when there are a relatively large quantity of evenly distributed frequency channel numbers, calculation complexity of directly determining, from the plurality of evenly distributed frequency channel numbers, a frequency channel number combination that meets a requirement is high.

Embodiments of this application provide a sensing signal transmission method. The sensing signal transmission method includes: determining frequency channel numbers used for sensing from $M$ sensing resource blocks; and sending a sensing signal on the frequency channel numbers used for sensing. The $M$ sensing resource blocks are determined from $M_1$ candidate resource blocks, and the $M$ sensing resource blocks include a 1st candidate resource block and an $M_1$th candidate resource block in the $M_1$ candidate resource blocks; a quantity of frequency channel numbers included in each of the $M$ sensing resource blocks is $K$. The frequency channel numbers used for sensing include: a 1st frequency channel number, a $K$th frequency channel number, an $i$th frequency channel number, and a $j$th frequency channel number in each of the $M$ sensing resource blocks; a length of a frequency baseline between the $i$th frequency channel number and the $j$th frequency channel number is a first value; and a length of a frequency baseline between two frequency channel numbers is an absolute value of a frequency difference between the two frequency channel numbers. Relative positions of frequency channel numbers used for sensing in each of the $M$ sensing resource blocks are the same. In the method, the frequency channel numbers used for sensing are determined hierarchically, so that frequency domain resources used for transmitting the sensing signal can be determined with low complexity. In addition, this manner is a manner of transmitting the sensing signal by using non-evenly distributed frequency channel numbers, and compared with a manner of transmitting the sensing signal by using evenly distributed frequency channel numbers, this manner reduces frequency domain resources used for transmitting the sensing signal.

The following describes, with reference to the accompanying drawings, the sensing signal transmission method provided in embodiments of this application.

FIG. 5 is a diagram of a sensing signal transmission method according to an embodiment of this application. The sensing signal transmission method may be performed by a first device. The sensing signal transmission method includes the following steps.

S101: The first device determines frequency channel numbers used for sensing from $M$ sensing resource blocks. The $M$ sensing resource blocks are determined from $M_1$ candidate resource blocks, and the $M$ sensing resource blocks include a 1st candidate resource block and an $M_1$th candidate resource block in the $M_1$ candidate resource blocks; a quantity of frequency channel numbers included in each of the $M$ sensing resource blocks is $K$. The frequency channel numbers used for sensing include: a 1st frequency channel number, a $K$th frequency channel number, an $i$th frequency channel number, and a $j$th frequency channel number in each of the $M$ sensing resource blocks; a length of a frequency baseline between the $i$th frequency channel number and the $j$th frequency channel number is a first value; and a length of a frequency baseline between two frequency channel numbers is an absolute value of a frequency difference between the two frequency channel numbers. Relative positions of frequency channel numbers used for sensing in each of the $M$ sensing resource blocks are the same. $M$, $M_1$, and $K$ are integers greater than 1, $M$ is less than or equal to $M_1$, and $i$ and $j$ are positive integers less than or equal to $K$.

In this embodiment of this application, an $m$th candidate resource block in the $M_1$ candidate resource blocks is a candidate resource block arranged in an $m$th position in ascending order of frequencies of the $M_1$ candidate resource blocks. For example, in step S101, the 1st candidate resource block and the $M_1$th candidate resource block in the $M_1$ candidate resource blocks are respectively a candidate resource block arranged in a 1st position and a candidate resource block arranged in an $M_1$th position. In addition, an $m$th sensing resource block in the $M$ sensing resource blocks and an $m$th resource block in the following $M_2$ resource blocks are similar, and details are not described herein.

An $m$th frequency channel number in each sensing resource block is a frequency channel number arranged in an

$m^{th}$ position in the frequency channel numbers included in the sensing resource block in ascending order of frequencies. For example, in step S101, the 1st frequency channel number, the $K^{th}$ frequency channel number, the $i^{th}$ frequency channel number, and the $j^{th}$ frequency channel number in each sensing resource block are respectively a frequency channel number arranged in a 1st position, a frequency channel number arranged in a $K^{th}$ position, a frequency channel number arranged in an $i^{th}$ position, and a frequency channel number arranged in a $j^{th}$ position in the frequency channel numbers included in the sensing resource block. In addition, an $m^{th}$ frequency channel number in each candidate resource block and an $m^{th}$ frequency channel number in the following $K$ frequency channel numbers are similar, and details are not described herein.

A relative position of a frequency channel number in the sensing resource block is an arrangement position of the frequency channel number in the frequency channel numbers included in the sensing resource block and arranged in ascending order of frequencies. For example, three frequency channel numbers included in a sensing resource block 1 are arranged as a frequency channel number 1, a frequency channel number 2, and a frequency channel number 3 in ascending order of frequencies, and three frequency channel numbers included in a sensing resource block 2 are arranged as a frequency channel number 4, a frequency channel number 5, and a frequency channel number 6 in ascending order of frequencies. In this case, relative positions of the frequency channel number 1 and the frequency channel number 4 are the same, relative positions of the frequency channel number 2 and the frequency channel number 5 are the same, and relative positions of the frequency channel number 3 and the frequency channel number 6 are the same.

In addition, a manner of sorting frequency channel numbers, sensing resource blocks, candidate resource blocks, and resource blocks is not limited in this embodiment of this application. For example, a manner of performing arrangement in descending order of frequencies may alternatively be used. In this embodiment of this application, the manner of performing arrangement in ascending order of frequencies is used as an example for description.

For example, with reference to FIG. 6, $M_1$ is equal to 3, $M$ is equal to 2, and $K$ is equal to 4. The three candidate resource blocks are a candidate resource block 1, a candidate resource block 2, and a candidate resource block 3. The candidate resource block 1 includes four frequency channel numbers whose frequencies are $f_1, f_2, f_3,$ and $f_4$, the candidate resource block 2 includes four frequency channel numbers whose frequencies are $f_5, f_6, f_7,$ and $f_8$, and the candidate resource block 3 includes four frequency channel numbers whose frequencies are $f_9, f_{10}, f_{11},$ and $f_{12}$. The first value is an absolute value of a difference between $f_1$ and $f_2$. The two sensing resource blocks determined from the three candidate resource blocks include a 1st candidate resource block (that is, the candidate resource block 1) and a 3rd candidate resource block (that is, the candidate resource block 3), and the frequency channel numbers used for sensing include a 1st frequency channel number, a 2nd frequency channel number, and a 4th frequency channel number in each sensing resource block, that is, the frequency channel numbers used for sensing include three frequency channel numbers whose frequencies are $f_1, f_2,$ and $f_4$ in the candidate resource block 1 and three frequency channel numbers whose frequencies are $f_9, f_{10},$ and $f_{12}$ in the candidate resource block 3.

Optionally, the sensing signal transmission method further includes: The first device determines the $M$ sensing resource blocks from the $M_1$ candidate resource blocks.

In an optional implementation, the first value is determined based on a maximum unambiguous ranging distance. Optionally, the first value is less than or equal to a second value, and the second value is determined based on the maximum unambiguous ranging distance, and may be expressed as $Second\ value = \frac{c}{Maximum\ unambiguous\ ranging\ distance}$, where $c$ is a speed of light, for example, $c$ is equal to $3 \times 10^8$ meters/second.

In an optional implementation, a length of a frequency baseline between a 1st frequency channel number in the 1st candidate resource block and a $K^{th}$ frequency channel number in the $M_1{}^{th}$ candidate resource block in the $M_1$ candidate resource blocks is determined based on a ranging resolution. Optionally, the length of the frequency baseline between the 1st frequency channel number in the 1st candidate resource block and the $K^{th}$ frequency channel number in the $M_1{}^{th}$ candidate resource block in the $M_1$ candidate resource blocks is greater than or equal to a third value. The third value is determined based on the ranging resolution, and may be expressed as $Third\ value = \frac{c}{Ranging\ resolution}$, where $c$ is a speed of light, for example, $c$ is equal to $3 \times 10^8$ meters/second.

Optionally, the first device may further adjust a value of the maximum unambiguous ranging distance and a value of the ranging resolution based on an application requirement. In this case, the first value and the length of the frequency baseline between the 1st frequency channel number in the 1st candidate resource block and the $K^{th}$ frequency channel number in the $M_1{}^{th}$ candidate resource block in the $M_1$ candidate resource blocks are respectively determined based on an adjusted maximum unambiguous ranging distance and an adjusted ranging resolution. For example, when a sensing distance is focused on in ranging, the maximum unambiguous ranging distance may be adjusted, for example, the value of the maximum unambiguous ranging distance is increased; or when a sensing resolution is focused on in ranging, the ranging resolution may be adjusted, for example, the value of the ranging resolution is decreased.

Optionally, the length of the frequency baseline between the 1st frequency channel number in the 1st candidate

resource block and the $K^{th}$ frequency channel number in the $M_1^{th}$ candidate resource block in the $M_1$ candidate resource blocks may be an integer multiple of the first value. In addition, the first value may be an integer multiple of a subcarrier spacing, and the length of the frequency baseline between the 1st frequency channel number in the 1st candidate resource block and the $K^{th}$ frequency channel number in the $M_1^{th}$ candidate resource block in the $M_1$ candidate resource blocks may be an integer multiple of the subcarrier spacing. For example, when the subcarrier spacing is 30 kilohertz (kilohertz, KHz), the first value is an integer multiple of 30 KHz, and the length of the frequency baseline between the 1st frequency channel number in the 1st candidate resource block and the $K^{th}$ frequency channel number in the $M_1^{th}$ candidate resource block in the $M_1$ candidate resource blocks is an integer multiple of 30 KHz.

In an optional implementation, a length of a frequency baseline between different sensing resource blocks in the $M$ sensing resource blocks is a first length; and the first length is $p \times B_1$, and $p$=1, 2, ..., and $\dfrac{B_2}{B_1}$ .A length of a frequency baseline between two sensing resource blocks is an absolute value of a frequency difference between $l^{th}$ frequency channel numbers in the two sensing resource blocks, where $l$ is a positive integer less than or equal to $K$. For specific descriptions, refer to the foregoing related descriptions of the frequency baseline. Details are not described again.

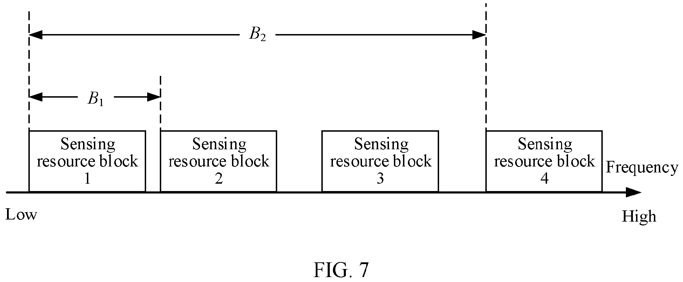

In the $M$ sensing resource blocks, a length of a frequency baseline between two sensing resource blocks with a minimum length of a frequency baseline is $B_1$, and a length of a frequency baseline between two sensing resource blocks with a maximum length of a frequency baseline is $B_2$. For example, with reference to FIG. 7, the determined four sensing resource blocks are arranged in ascending order of frequencies as follows: a sensing resource block 1, a sensing resource block 2, a sensing resource block 3, and a sensing resource block 4. In the four sensing resource blocks, a length of a frequency baseline between the sensing resource block 1 and the sensing resource block 2 is the smallest, and a length of a frequency baseline between the sensing resource block 1 and the sensing resource block 4 is the largest. In this case, $B_1$ is equal to the length of the frequency baseline between the sensing resource block 1 and the sensing resource block 2, and $B_2$ is equal to the length of the frequency baseline between the sensing resource block 1 and the sensing resource block 4.

In addition, in the $M_1$ candidate resource blocks, a length of a frequency baseline between two candidate resource blocks with a minimum length of a frequency baseline is $B_1$, and a length of a frequency baseline between two candidate resource blocks with a maximum length of a frequency baseline is $B_2$. A length of a frequency baseline between two candidate resource blocks is an absolute value of a frequency difference between $l^{th}$ frequency channel numbers in the two candidate resource blocks, which is similar to the length of the frequency baseline between the two sensing resource blocks, and is not described again.

It can be learned that the length of the frequency baseline between the two sensing resource blocks with the minimum length of the frequency baseline in the $M$ sensing resource blocks is equal to the length of the frequency baseline between the two sensing resource blocks with the minimum length of the frequency baseline in the $M_1$ candidate resource blocks; and the length of the frequency baseline between the two sensing resource blocks with the maximum length of the frequency baseline in the $M$ sensing resource blocks is equal to the length of the frequency baseline between the two sensing resource blocks with the maximum length of the frequency baseline in the $M_1$ candidate resource blocks. Lengths of frequency baselines formed by the $M_1$ candidate resource blocks each are the first length, which may indicate that frequency baselines formed by the $M$ sensing resource blocks determined from the $M_1$ candidate resource blocks are completely covered, and accuracy of performing ranging based on the completely covered frequency baselines is higher.

Optionally, the $M$ sensing resource blocks are candidate resource blocks included in a first combination determined from the $M_1$ candidate resource blocks, and the first combination is a combination in which a length of a frequency baseline between different candidate resource blocks is the first length and a quantity of candidate resource blocks is the smallest. In the $M_1$ candidate resource blocks, a length of a frequency baseline between two candidate resource blocks with a minimum length of a frequency baseline is $B_1$, and a length of a frequency baseline between two candidate resource blocks with a maximum length of a frequency baseline is $B_2$. It can be learned that the $M$ sensing resource blocks determined from the $M_1$ candidate resource blocks are candidate resource blocks included in a combination in which frequency baselines formed by the candidate resource blocks are completely covered and a quantity of candidate resource blocks is the smallest. In addition, if a plurality of combinations in which a length of a frequency baseline between different candidate resource blocks is the first length and a quantity of candidate resource blocks is the smallest may be determined from the $M_1$ candidate resource blocks, the first combination may be any combination of the plurality of combinations. A determining manner of the first combination includes Implementation 1.1 and Implementation 1.2.

Implementation 1.1: The first combination is determined by the first device from the $M_1$ candidate resource blocks by using a search algorithm, and the search algorithm may be an exhaustive algorithm, a simulated annealing algorithm, an ant colony algorithm, or the like. Specifically, the first device may determine, from the $M_1$ candidate resource blocks by using the search algorithm, one or more combinations in which a length of a frequency baseline between different candidate resource blocks is the first length, and then select a combination in which a quantity of candidate resource blocks is the smallest from the one or more combinations as the first combination.

Implementation 1.2: The first combination is found by the first device from a predetermined table based on a value of $M_1$. An example table provided in this embodiment of this application is shown in Table 1. Table 1 represents a correspondence between a quantity $M_1$ of candidate resource blocks and a relative position of a candidate resource block included in a combination in which a length of a frequency baseline between different candidate resource blocks in the $M_1$ candidate resource blocks is the first length and a quantity of candidate resource blocks is the smallest when the $M_1$ candidate resource blocks are arranged in ascending order of frequencies. In addition, Table 1 shows only an example of a relative position of a candidate resource block included in a combination in which a length of a frequency baseline between different candidate resource blocks is the first length and a quantity of candidate resource blocks is the smallest when the value of $M_1$ is 1 to 10. Actually, Table 1 may further include a case in which the value of $M_1$ is greater than 10.

For example, the quantity $M_1$ of candidate resource blocks is 4, and it may be learned from Table 1 that the first combination may include a 1st candidate resource block, a 2nd candidate resource block, and a 4th candidate resource block in the four candidate resource blocks. In this case, sensing resource blocks determined from the four candidate resource blocks include the 1st candidate resource block, the 2nd candidate resource block, and the 4th candidate resource block. Alternatively, the first combination may include a 1st candidate resource block, a 3rd candidate resource block, and a 4th candidate resource block. In this case, sensing resource blocks determined from the four candidate resource blocks include the 1st candidate resource block, the 3nd candidate resource block, and the 4th candidate resource block.

**Table 1**

| Quantity $M_1$ of candidate resource blocks | Relative position of a candidate resource block included in a combination in which a length of a frequency baseline between different candidate resource blocks is a first length and a quantity of candidate resource blocks is the smallest |
|---|---|
| 1 | {1} |
| 2 | {1 2} |
| 3 | {1 2 3} |
| 4 | {1 24}, {13 4} |
| 5 | { 1 2 3 5}, {1 2 4 5}, {1345} |
| 6 | {1 2 3 6}, {1 2 4 6}, {1 3 5 6}, {1 4 5 6} |
| 7 | {1 2 5 7}, {13 67} |
| 8 | {1 2 3 4 8}, {1 2 3 5 8}, {1 2 3 6 8}, {1 2 4 6 8}, {1 2 4 7 8}, {1 2 5 6 8}, {1 2 5 7 8}, {1 3 4 7 8}, {1 3 5 7 8}, {1 3 6 7 8}, {14678}, {15678} |
| 9 | {1 23 6 9}, {1 2 4 8 9}, {1 2 5 7 9}, {12 6 7 9}, {12 6 8 9}, {1 3 4 8 9}, {13 5 8 9}, {1 4 7 8 9} |
| 10 | {1 2 3 7 10}, {1 2 5 8 10}, {13 6 9 10}, {1 4 8 9 10} |

Optionally, a length of a frequency baseline between any two adjacent candidate resource blocks in the $M_1$ candidate resource blocks is the same. Any two adjacent candidate resource blocks in the $M_1$ candidate resource blocks are any two candidate resource blocks that are arranged in adjacent positions in ascending order of frequencies in the $M_1$ candidate resource blocks. It can be learned that the $M_1$ candidate resource blocks are evenly distributed.

In addition, a length of a frequency baseline between any two adjacent candidate resource blocks in the $M_1$ candidate resource blocks is $B_1$. In addition, a length of a frequency baseline between two candidate resource blocks with a maximum length of a frequency baseline in the $M_1$ candidate resource blocks is $B_2$. In this case, a length of a frequency baseline between different candidate resource blocks in the $M_1$ candidate resource blocks is $p \times B_1$, where $p$=1, 2, ..., and

$$\frac{B_2}{B_1}$$

. It can be learned that lengths of the frequency baselines formed by the $M$ sensing resource blocks are the same as lengths of the frequency baselines formed by the $M_1$ candidate resource blocks.

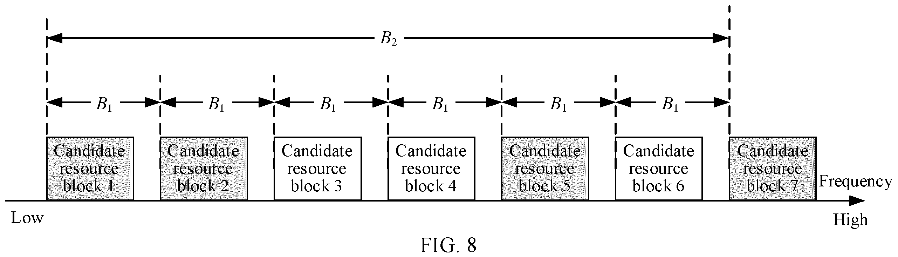

For example, with reference to FIG. 8, $M_1$ is equal to 7, and lengths of frequency baselines between different candidate resource blocks in the evenly distributed seven candidate resource blocks include $B_1$, $2B_1$, $3B_1$, $4B_1$, $5B_1$ and $6B_1$. Four sensing resource blocks that are included in the first combination and that are determined from the seven candidate resource blocks are respectively: a candidate resource block 1, a candidate resource block 2, a candidate resource block 5, and a candidate resource block 7, and lengths of frequency baselines between different candidate resource blocks in the four sensing resource blocks include $B_1$, $2B_1$, $3B_1$, $4B_1$, $5B_1$, and $6B_1$. It can be learned that the lengths of the frequency baselines formed by the four sensing resource blocks are the same as the lengths of the frequency baselines formed by the seven candidate resource blocks. In this case, an effect of performing ranging based on a sensing signal transmitted on the four sensing resource blocks is the same as an effect of performing ranging based on a sensing signal transmitted on the seven candidate resource blocks, and frequency domain resources used for the ranging are further reduced.

Optionally, in frequency channel numbers included in each of the $M_1$ candidate resource blocks, a length of a frequency baseline between two frequency channel numbers with a minimum length of a frequency baseline is $b_1$, and a length of a frequency baseline between two frequency channel numbers with a maximum length of a frequency baseline is $b_2$; and $b_1$ is equal to the first value. Optionally, the frequency channel numbers included in each of the $M_1$ candidate resource blocks may be evenly distributed.

In an optional implementation, a length of a frequency baseline between different frequency channel numbers in the frequency channel numbers used for sensing in each sensing resource block is a second length; and the second length is $k \times b_1$, and $k$=1, 2, ..., and $\dfrac{b_2}{b_1}$. In the frequency channel numbers used for sensing in each sensing resource block, a length of a frequency baseline between two frequency channel numbers with a minimum length of a frequency baseline is $b_1$, and a length of a frequency baseline between two frequency channel numbers with a maximum length of a frequency baseline is $b_2$; and $b_1$ is equal to the first value.

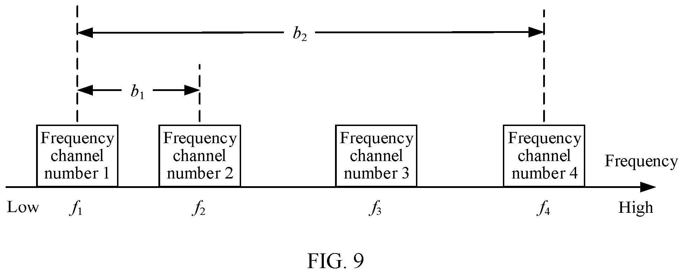

For example, with reference to FIG. 9, four frequency channel numbers used for sensing in each sensing resource block are arranged in ascending order of frequencies: a frequency channel number 1, a frequency channel number 2, a frequency channel number 3, and a frequency channel number 4. In the four frequency channel numbers, a length of a frequency baseline between the frequency channel number 1 and the frequency channel number 2 is the smallest, and a length of a frequency baseline between the frequency channel number 1 and the frequency channel number 4 is the largest. In this case, $b_1$ is equal to the length of the frequency baseline between the frequency channel number 1 and the frequency channel number 2, and $b_2$ is equal to the length of the frequency baseline between the frequency channel number 1 and the frequency channel number 4.

Optionally, relative positions of the frequency channel numbers used for sensing in each sensing resource block and frequency channel numbers included in a second combination are the same; and the second combination is a combination that is determined from $K$ frequency channel numbers and in which a length of a frequency baseline between different frequency channel numbers is the second length and a quantity of frequency channel numbers is the smallest. In the $K$ frequency channel numbers, a length of a frequency baseline between two frequency channel numbers with a minimum length of a frequency baseline is $b_1$, and a length of a frequency baseline between two frequency channel numbers with a maximum length of a frequency baseline is $b_2$. In addition, distribution of the $K$ frequency channel numbers is consistent with distribution of the $K$ frequency channel numbers included in the sensing resource block. Specifically, when the $K$ frequency channel numbers and the $K$ frequency channel numbers included in the sensing resource block are respectively arranged in ascending order of frequencies, a frequency difference between a $k_1$th frequency channel number and a $(k_1+1)$th frequency channel number in the $K$ frequency channel numbers is the same as a frequency difference between a $k_1$th frequency channel number and a $(k_1+1)$th frequency channel number in the $K$ frequency channel numbers included in the sensing resource block, where $k_1$ is a positive integer less than $K$-1.

For example, $K$ is equal to 7, the seven frequency channel numbers are arranged in ascending order of frequencies, and the second combination includes a 1st frequency channel number, a 2nd frequency channel number, a 5th frequency channel number, and a 7th frequency channel number in the seven frequency channel numbers. In this case, the seven frequency channel numbers included in each sensing resource block are arranged in ascending order of frequencies, and the frequency channel numbers used for sensing in each sensing resource block include a 1st frequency channel number, a 2nd frequency channel number, a 5th frequency channel number, and a 7th frequency channel number in the sensing resource block.

It can be learned that the length of the frequency baseline between the two frequency channel numbers with the minimum length of the frequency baseline in the frequency channel numbers used for sensing in each sensing resource block is the same as the length of the frequency baseline between the two frequency channel numbers with the minimum length of the frequency baseline in the K frequencies; and the length of the frequency baseline between the two frequency channel numbers with the maximum length of the frequency baseline in the frequency channel numbers used for sensing in each sensing resource block is the same as the length of the frequency baseline between the two frequency channel numbers with the maximum length of the frequency baseline in the K frequencies. The lengths of the frequency baselines formed by the frequency channel numbers used for sensing in each sensing resource block are the second length, which may indicate that the frequency baselines formed by the frequency channel numbers used for sensing in each sensing resource block are completely covered, and accuracy of performing ranging based on the completely covered frequency baselines is higher.

In addition, if a plurality of combinations in which a length of a frequency baseline between different frequency channel numbers is the second length and a quantity of frequency channel numbers is the smallest may be determined from the $K$ frequency channel numbers, the second combination may be any combination of the plurality of combinations. A determining manner of the second combination includes Implementation 2.1 and Implementation 2.2.

Implementation 2.1: The second combination is determined by the first device from the $K$ frequency channel numbers by using a search algorithm, and the search algorithm may be an exhaustive algorithm, a simulated annealing algorithm, an ant colony algorithm, or the like. Specifically, the first device may determine, from the $K$ frequency channel numbers by using the search algorithm, one or more combinations in which a length of a frequency baseline between different frequency channel numbers is the second length, and then select a combination in which a quantity of frequency channel numbers is the smallest from the one or more combinations as the second combination.

Implementation 2.2: The second combination is found by the first device from a predetermined table based on the quantity $K$ of frequency channel numbers included in each candidate resource block. This embodiment of this application may provide an example table. The table represents a correspondence between the quantity $K$ of frequency channel numbers included in each candidate resource block and a relative position of a frequency channel number included in a combination in which a length of a frequency baseline between different frequency channel numbers in the $K$ frequency channel numbers is the second length and a quantity of frequency channel numbers is the smallest when the $K$ frequency channel numbers are arranged in ascending order of frequencies. This table is similar to Table 1. A difference lies in that this table is obtained by representing the parameter in the first column in Table 1 as the quantity $K$ of frequency channel numbers included in each candidate resource block, and representing the parameter in the second column in Table 1 as the relative position of the frequency channel number included in the combination in which a length of a frequency baseline between different frequency channel numbers in the $K$ frequency channel numbers is the second length and a quantity of frequency channel numbers is the smallest. A manner in which the first device determines the second combination by querying a table is similar to a manner in which the first device determines the first combination by querying a table, and details are not described again.

Optionally, in actual application, for the resource block and the frequency channel number, different tables may be separately set, or one table (Table 1) may be shared. This is not limited in this application.

Optionally, if frequency channel numbers included in each of the $M_1$ candidate resource blocks are evenly distributed, a length of a frequency baseline between any two adjacent frequency channel numbers in the $K$ frequencies is the same, that is, the $K$ frequency channel numbers are evenly distributed. Any two adjacent frequency channel numbers in the $K$ frequency channel numbers are any two frequency channel numbers that are arranged in adjacent positions in ascending or descending order of frequencies.

In addition, a length of a frequency baseline between any two adjacent frequency channel numbers in the $K$ frequency channel numbers is $b_1$. In this case, a length of a frequency baseline between two frequency channel numbers with a maximum length of a frequency baseline in the $K$ frequency channel numbers is $b_2=(K-1)b_1$, and a length of a frequency baseline between different frequency channel numbers in the $K$ frequency channel numbers is $p \times b_1$, where $p$=1, 2, ..., and $(K-1)$. In this case, the lengths of the frequency baselines formed by the frequency channel numbers used for sensing in each sensing resource block are the same as the lengths of the frequency baselines formed by the $K$ frequency channel numbers.

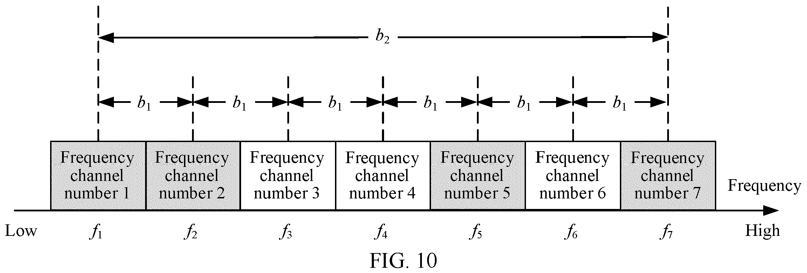

For example, with reference to FIG. 10, $K$ is equal to 7, and lengths of frequency baselines between different frequency channel numbers in the evenly distributed seven frequency channel numbers include $b_1$, $2b_1$, $3b_1$, $4b_1$, $5b_1$, and $6b_1$. Four frequency channel numbers included in the second combination determined from the seven frequency channel numbers are respectively a frequency channel number 1, a frequency channel number 2, a frequency channel number 5, and a frequency channel number 7. Lengths of frequency baselines between different frequency channel numbers in the four frequency channel numbers include $b_1$, $2b_1$, $3b_1$, $4b_1$, $5b_1$, and $6b_1$. It can be learned that the frequency baselines formed by the four frequency channel numbers are the same as the frequency baselines formed by the seven frequency channel numbers. In this case, an effect of performing ranging based on a sensing signal transmitted on the four frequency channel numbers is the same as an effect of performing ranging based on a sensing signal transmitted on the seven frequency channel numbers, and frequency domain resources used for the ranging are further reduced.

Optionally, the $K$ frequency channel numbers are any $K$ frequency channel numbers in which a length of a frequency baseline between two frequency channel numbers with a minimum length of a frequency baseline is $b_1$, and a length of a frequency baseline between two frequency channel numbers with a maximum length of a frequency baseline is $b_2$. For example, the $K$ frequency channel numbers may be $K$ frequency channel numbers included in one of the $M_1$ candidate resource blocks, or the $K$ frequency channel numbers may be $K$ frequency channel numbers in which a minimum frequency is 0, a maximum frequency is $b_2$, and a length of a frequency baseline between two frequency channel numbers with a minimum length of a frequency baseline is $b_1$. If the $K$ frequency channel numbers are still evenly distributed, frequencies of the $K$ frequency channel numbers may be, for example, 0, $b_1$, $2b_1$, ..., and $(K-1)b_1$.

In an optional implementation, the $M_1$ candidate resource blocks are determined from $M_2$ resource blocks

obtained by evenly dividing $N$ frequency channel numbers, and a length of a frequency baseline between two frequency channel numbers with a minimum length of a frequency baseline in the $N$ frequency channel numbers is the first value; and $M_1$ is less than or equal to $M_2$. A quantity of frequency channel numbers included in each of the $M_2$ resource blocks is $K$, and $M_2$ is an integer greater than 1.

Optionally, a length of a frequency baseline between any two adjacent frequency channel numbers in the $N$ frequency channel numbers is the same. That is, the $N$ frequency channel numbers are evenly distributed. Any two adjacent frequency channel numbers in the $N$ frequency channel numbers are any two frequencies that are arranged in adjacent positions in ascending order of frequencies in the $N$ frequency channel numbers. In addition, a length of a frequency baseline between any two adjacent frequency channel numbers in the $N$ frequency channel numbers is $b_1$.

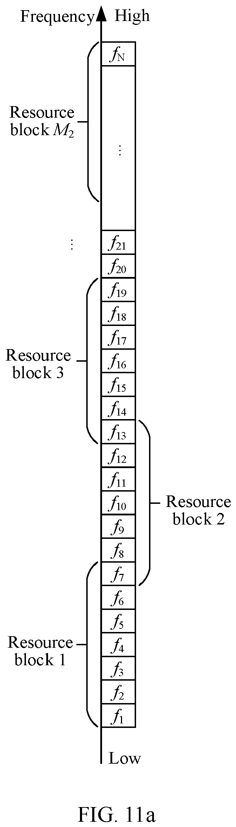

Optionally, two resource blocks that are adjacent in frequency domain in the $M_2$ resource blocks include $q$ same frequency channel numbers, where $q$ is a positive integer and $q$ is less than $K$. $N$, $M_2$, $K$, and $q$ satisfy: $N = M_2 \times K - (M_2 - 1) \times q$. $q$ may be predefined by the first device, or may be manually set. For example, with reference to FIG. 11a, the $N$ frequency channel numbers are arranged in ascending order of frequencies, and frequencies of the $N$ frequency channel numbers are $f_1$, $f_2$, ..., and $f_N$ respectively. The $N$ frequencies are evenly divided into the $M_2$ resource blocks. Each resource block includes seven frequency channel numbers, and two adjacent resource blocks include one same frequency channel number. For example, both a resource block 1 and a resource block 2 include a frequency channel number whose frequency is $f_7$, and both a resource block 2 and a resource block 3 include a frequency channel number whose frequency is $f_{13}$.

If the $M_2$ resource blocks are evenly distributed, and frequency channel numbers included in each of the $M_2$ resource blocks are evenly distributed, a set $S_1$ formed by frequency channel numbers used for sensing is:

$$\mathbf{S}_1 = f_{start1} + \bigcup_i^M \left[ (m_i - 1) \times (K - q) \times b_1 + \left( \mathbf{S}_2 - f_{start2} \right) \right] \tag{1}$$

The $M_2$ resource blocks correspond to numbers 1 to $M_2$ one by one in ascending order of frequencies, $m_i$ is a number corresponding to an $i^{th}$ sensing resource block in the $M$ sensing resource blocks, $S_2$ is the second combination determined from the evenly distributed $K$ frequency channel numbers, $f_{start1}$ is a frequency of a 1st frequency channel number when the $N$ frequency channel numbers are arranged in ascending order of frequencies, and $f_{start2}$ is a frequency of a 1st frequency channel number when the frequency channel numbers in $S_2$ are arranged in ascending order of frequencies.

When the $K$ frequency channel numbers are $K$ frequency channel numbers included in the 1st candidate resource block in the $M_1$ candidate resource blocks, $f_{start2}$ is equal to $f_{start1}$. In this case, a set formed by frequency channel numbers used for sensing is $\mathbf{S}_1 = \bigcup_i^M \left[ (m_i - 1) \times (K - q) \times b_1 + \mathbf{S}_2 \right]$. When the frequencies of the $K$ frequency channel numbers are $0$, $b_1$, $2b_1$, ..., and $(K-1)b_1$, $f_{start2}$ is equal to 0. In this case, a set formed by frequency channel numbers used for sensing is $\mathbf{S}_1 = f_{start1} + \bigcup_i^M \left[ (m_i - 1) \times (K - q) \times b_1 + \mathbf{S}_2 \right]$.

Optionally, if two resource blocks that are adjacent in frequency domain in the $M_2$ resource blocks include $q$ same frequency channel numbers, and $N$, $M_2$, K, and $q$ satisfy $N = M_2 \times K - (M_2 - 1) \times q$, where $M_2$ may be an odd number, and $M_1$ is equal to a value obtained by dividing a value obtained by adding 1 to $M_2$ by 2. The $M_2$ resource blocks are sorted in ascending order in frequency domain, and the $M_1$ candidate resource blocks are resource blocks sorted in odd-numbered positions in the $M_2$ resource blocks. For example, with reference to FIG. 11a, that K is equal to 7 and $q$ is equal to 1 is used as an example in FIG. 11a. The $M_1$ candidate resource blocks include a resource block 1, a resource block 3, a resource block 5, ..., and a resource block $M_2$.

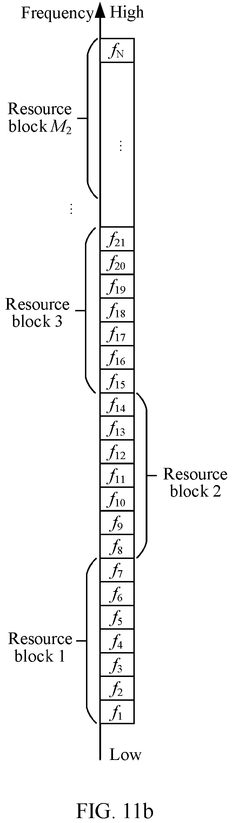

Two resource blocks that are adjacent in frequency domain in the $M_2$ resource blocks include $q$ same frequency channel numbers, where $q$ is greater than or equal to 1, so that when $M_1$ is less than $M_2$, frequency baselines formed by all frequency channel numbers in the $M_1$ candidate resource blocks determined from the $M_2$ resource blocks are completely covered. For example, a length of a frequency baseline between two adjacent frequency channel numbers in the evenly distributed $N$ frequencies is $b$. With reference to FIG. 11b and FIG. 11a, a difference between FIG. 11b and FIG. 11a lies in that two resource blocks that are adjacent in frequency domain in the $M_2$ resource blocks in FIG. 11b do not include a same frequency channel number. In FIG. 11a, lengths of frequency baselines formed by all frequency channel numbers included in candidate resource blocks sorted in odd-numbered positions include 0, *b*, ..., *6b, 7b, 8b*, ..., that is, the frequency baselines formed by all the frequency channel numbers included in the candidate resource blocks sorted in the odd-numbered positions are completely covered. In FIG. 11b, lengths of frequency baselines formed by all frequency channel numbers included in candidate resource blocks sorted in odd-numbered positions include 0, *b*, ..., *6b*, 8b, ..., and do not include *7b, 21b,* ..., that is, the frequency baselines formed by all the frequency channel numbers included in the candidate resource blocks sorted in the odd-numbered positions are not completely covered.

It can be learned that two resource blocks that are adjacent in frequency domain in the $M_2$ resource blocks include $q$ same frequency channel numbers, so that the frequency baselines formed by all the frequency channel numbers included in the $M_1$ candidate resource blocks sorted in odd-numbered positions are completely covered, thereby helping the first device select the $M$ sensing resource blocks from the $M_1$ candidate resource blocks, where the frequency baselines formed by all the frequency channel numbers included in the $M$ sensing resource blocks are completely covered, and improving accuracy of performing ranging based on the completely covered frequency baselines.

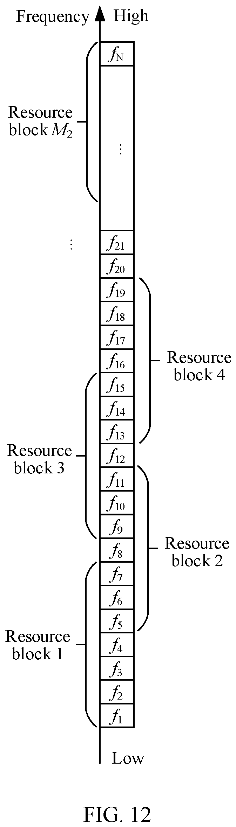

In addition, the $M_1$ candidate resource blocks may be resource blocks arranged in odd-numbered positions in the $M_2$ resource blocks, or may be resource blocks arranged in other positions. For example, with reference to FIG. 12, the $N$ frequency channel numbers are arranged in ascending order of frequencies, and frequencies of the $N$ frequency channel numbers are $f_1, f_2, ...,$ and $f_N$ respectively. The $N$ frequencies are evenly divided into the $M_2$ resource blocks, each resource block includes seven frequency channel numbers, and two adjacent resource blocks include three same frequency channel numbers. In this case, the $M_1$ candidate resource blocks may include a resource block 1, a resource block 4, a resource block 7, ..., and a resource block $M_2$.

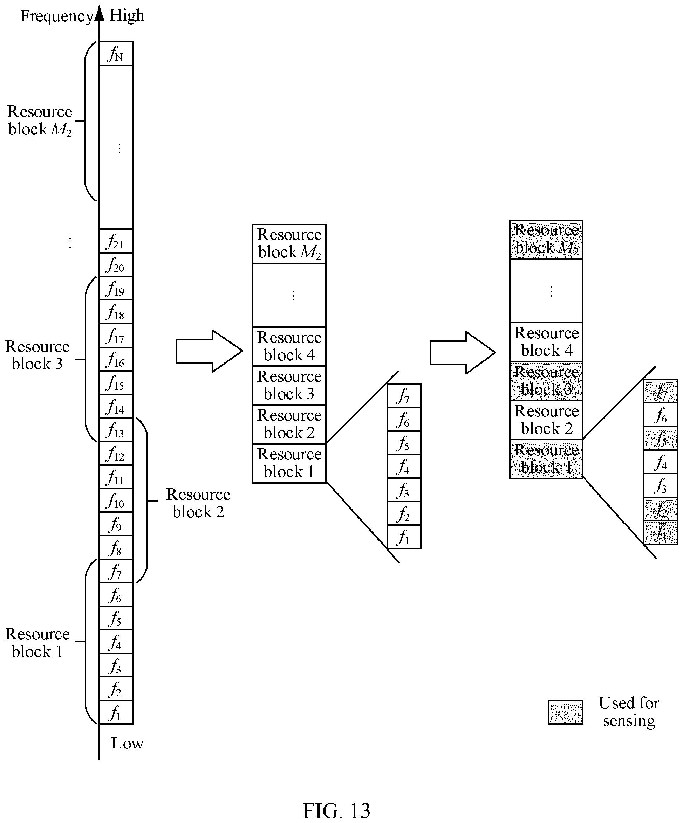

In conclusion, with reference to FIG. 13, that $K$ is equal to 7 and $q$ is equal to 1 is used as an example in FIG. 13. A block division operation performed by the first device on a frequency resource in a process of determining the frequency channel numbers used for sensing is to divide the $N$ frequency channel numbers into two levels of frequency domain resources. The first device may separately select, for the two levels, frequency domain resources used for sensing, and then determine, with reference to selection results of the two levels, overall frequency channel numbers used for sensing. One of the two levels is in a unit of a resource block, and the other level is in a unit of a frequency channel number in a block. The first device selects sensing resource blocks at the level in a unit of a resource block, and selects frequency channel numbers used for sensing in a block at the level in a unit of a frequency in a block. Compared with a manner in which the $N$ frequency channel numbers are not divided into two levels of frequency domain resources, but frequency channel numbers used for sensing are directly selected from the $N$ frequency channel numbers, this manner reduces calculation complexity.

S102: The first device sends a sensing signal on the frequency channel numbers used for sensing.

In an optional implementation, the sensing signal transmission method may further include: The first device receives a sensing signal, and performs sensing based on the received sensing signal. The sensing signal received by the first device is obtained after the sensing signal sent by the first device in step S102 passes through a channel between the first device and a sensing object, is reflected by the sensing object, and passes through a channel between the sensing object and the first device. This implementation may be applied to a scenario in which a function of the second device in the communication system in FIG. 1 is performed by the first device.

In an optional implementation, the sensing signal transmission method may further include: The second device receives a sensing signal on the frequency channel numbers used for sensing, and performs sensing based on the sensing signal. The sensing signal received by the second device is obtained after the sensing signal sent by the first device in step S102 passes through a channel between the first device and a sensing object, is reflected by the sensing object, and passes through a channel between the sensing object and the second device. This implementation may be applied to a scenario in which the communication system in FIG. 1 includes both the first device and the second device.

Optionally, before the first device sends the sensing signal on the frequency channel numbers used for sensing, the sensing signal transmission method may further include: The first device sends frequency channel number information used for sensing to the second device; and correspondingly, the second device receives the frequency channel number information used for sensing from the first device. Specifically, the frequency channel number information used for sensing may be the frequencies of the frequency channel numbers used for sensing. For example, if the frequency channel numbers used for sensing and determined by the first device include frequency channel numbers whose frequencies are $f_1, f_2, f_3,$ and $f_4,$ the first device may send the four frequencies $f_1, f_2, f_3,$ and $f_4$ to the second device, to notify the second device to receive the sensing signal on the frequency channel numbers $f_1, f_2, f_3,$ and $f_4$. Optionally, when the first device is a network device, and the second device is a terminal device, the frequency channel numbers used for sensing may be carried in radio resource control (radio resource control, RRC) signaling or downlink control information (downlink control information, DCI) for transmission.

Optionally, before the first device sends the sensing signal on the frequency channel numbers used for sensing, the sensing signal transmission method may further include: The first device sends position information of the $M$ sensing resource blocks in frequency domain and frequency channel number information used for sensing in one of the $M$ sensing resource blocks to the second device. In this case, the first device and the second device may agree on in advance a manner of determining the frequency channel numbers used for sensing based on the position information of the $M$ sensing resource blocks in frequency domain and the frequency channel number information used for sensing in one of the $M$ sensing resource blocks. Optionally, when the first device is a network device, and the second device is a terminal device, the position information of the $M$ sensing resource blocks in frequency domain and the frequency channel number information used for sensing in one of the $M$ sensing resource blocks may be carried in RRC signaling or DCI signaling for transmission.

The manner that is agreed on in advance between the first device and the second device and that is of determining the frequency channel number information used for sensing based on the position information of the $M$ sensing resource blocks in frequency domain and the frequency channel numbers used for sensing in one of the $M$ sensing resource blocks may include the following implementation 3.1 and implementation 3.2.

Implementation 3.1: The first device and the second device may agree on in advance that relative positions of frequency channel numbers used for sensing in each of the $M$ sensing resource blocks are the same. For example, four sensing resource blocks include a sensing resource block 1, a sensing resource block 2, and a sensing resource block 3. The sensing resource block 1 includes frequency channel numbers whose frequencies are $f_1$, $f_2$, $f_3$, and $f_4$, the sensing resource block 2 includes frequency channel numbers whose frequencies are $f_5$, $f_6$, $f_7$, and $f_8$, the sensing resource block 3 includes frequency channel numbers whose frequencies are $f_9$, $f_{10}$, $f_{11}$, and $f_{12}$, and frequency channel numbers used for sensing in the sensing resource block 1 include frequency channel numbers whose frequencies are $f_1$, $f_2$, and $f_4$. The first device may send the frequencies of the frequency channel numbers included in the four sensing resource blocks and the frequencies of the frequency channel numbers used for sensing in the sensing resource block 1 to the second device. In this case, the second device may determine, based on the frequencies of the frequency channel numbers used for sensing in the sensing resource block 1, a 1st frequency channel number, a 2nd frequency channel number, and a 4th frequency channel number in each sensing resource block as the frequency channel numbers used for sensing. Further, the second device may determine that the frequencies of the frequency channel numbers used for sensing are $f_1$, $f_2$, $f_4$, $f_5$, $f_6$, $f_8$, $f_9$, $f_{10}$, and $f_{12}$

Implementation 3.2: The first device and the second device may negotiate the foregoing formula (1) in advance. Before the first device sends the sensing signal on the frequency channel numbers used for sensing, the sensing signal transmission method may further include: The first device sends the parameters in the formula (1) to the second device, including: the frequency $f_{start1}$ of the 1st frequency channel number when the $N$ frequency channel numbers are arranged in ascending order of frequencies, the quantity $M$ of sensing resource blocks, the quantity $K$ of frequency channel numbers included in each resource block, the quantity $q$ of same frequency channel numbers included in two adjacent resource blocks, the frequencies of the frequency channel numbers included in the second combination $S_2$, the frequency $f_{start2}$ of the 1st frequency channel number when the frequency channel numbers in $S_2$ are arranged in ascending order of frequencies, and the minimum value $b_1$ in the lengths of the frequency baselines formed by the $N$ frequency channel numbers.

Optionally, before the first device sends the sensing signal on the frequency channel numbers used for sensing, the sensing signal transmission method may further include: The first device sends sensing resource indexes (sensing quality indexes, SQIs) corresponding to the $M$ sensing resource blocks and sensing resource indexes corresponding to frequency channel numbers used for sensing in one of the $M$ sensing resource blocks to the second device. This manner may be applied to a case in which the $M$ sensing resource blocks and the frequency channel numbers used for sensing in one sensing resource block are obtained through table lookup. In this case, the second device may determine the $M$ sensing resource blocks and the frequency channel numbers used for sensing in one of the $M$ sensing resource blocks from the table by using the received SQIs corresponding to the $M$ sensing resource blocks and the SQIs corresponding to the frequency channel numbers used for sensing in one of the $M$ sensing resource blocks, so as to determine all the frequency channel numbers used for sensing.

In this case, in Table 1 provided in the implementation 1.1, the following may be further added: an SQI corresponding to the combination in which a length of a frequency baseline between different candidate resource blocks in the $M_1$ candidate resource blocks is the first length and the quantity of candidate resource blocks is the smallest; and combinations in which relative positions of included candidate resource blocks are different correspond to different SQIs. In the table provided in the implementation 2.1, the following may be further added: an SQI corresponding to the combination in which a length of a frequency baseline between different frequency channel number in the $K$ frequency channel numbers is the second length and the quantity of frequency channel numbers is the smallest; and combinations of different relative positions of included frequency channel numbers correspond to different SQIs. In this case, the SQIs corresponding to the $M$ sensing resource blocks are SQIs corresponding to the first combination, and the SQIs corresponding to the frequency channel numbers used for sensing in one of the $M$ sensing resource blocks are SQIs corresponding to the second combination.

In conclusion, in the sensing signal transmission method, the first device determines the frequency channel numbers used for sensing from the $M$ sensing resource blocks, and sends the sensing signal on the frequency channel numbers used for sensing. The $M$ sensing resource blocks are determined from the $M_1$ candidate resource blocks, and the $M$ sensing resource blocks include the 1st candidate resource block and the $M_1$th candidate resource block in the $M_1$ candidate resource blocks; and the quantity of frequency channel numbers included in each of the $M$ sensing resource blocks is $K$. The frequency channel numbers used for sensing include: the 1st frequency channel number, the $K$th frequency channel number, the $i$th frequency channel number, and the $j$th frequency channel number in each of the $M$ sensing resource blocks; and the length of the frequency baseline between the $i^{th}$ frequency channel number and the $j^{th}$ frequency channel number is the first value.

It can be learned that the first device may select, from candidate resource blocks, a sensing resource block used for transmitting a sensing signal, and then select, from frequency channel numbers included in the determined sensing resource block, frequency channel numbers used for sensing. In other words, in the method, the frequency channel numbers used for sensing are determined hierarchically, and compared with a manner of directly determining frequency channel numbers used for sensing from a plurality of frequency channel numbers, the method can reduce calculation complexity. In addition, in the sensing signal transmission method, the relative positions of the frequency channel numbers used for sensing in each sensing resource block are the same. In this case, after determining frequency channel numbers used for sensing in one sensing resource block, the first device may determine, based on relative positions of the frequency channel numbers used for sensing in the sensing resource block, frequency channel numbers used for sensing in another sensing resource block, which can further reduce calculation complexity. In addition, compared with a manner of transmitting the sensing signal by using evenly distributed frequency channel numbers, the method further reduces frequency domain resources used for transmitting the sensing signal.

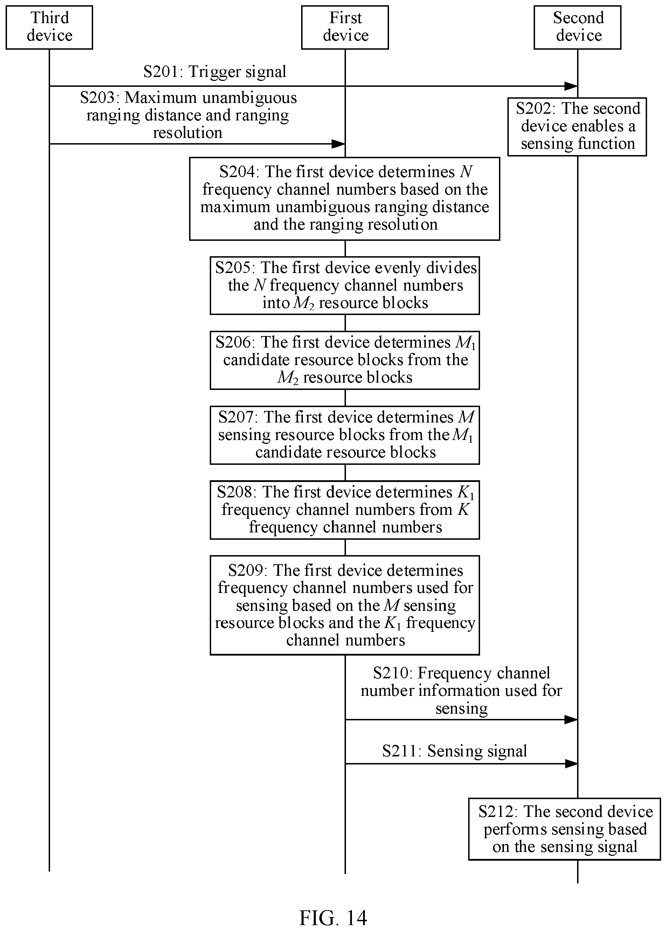

FIG. 14 is an interaction diagram of another sensing signal transmission method according to an embodiment of this application. The sensing signal transmission method shown in FIG. 14 is a specific implementation method in the sensing signal transmission method shown in FIG. 5. The sensing signal transmission method shown in FIG. 14 may be applied to the communication system shown in FIG. 1, and is described from a perspective of interaction between a first device, a second device, and a third device. The sensing signal transmission method includes the following steps.

S201: The third device sends a trigger signal to the second device. Correspondingly, the second device receives the trigger signal from the third device. The trigger signal is used to trigger the second device to enable a sensing function.

S202: The second device enables the sensing function.

S203: The third device sends a maximum unambiguous ranging distance and a ranging resolution to the first device. Correspondingly, the first device receives the maximum unambiguous ranging distance and the ranging resolution from the third device.

A sequence of step S201 and step S203 is not limited in this application.

S204: The first device determines N frequency channel numbers based on the maximum unambiguous ranging distance and the ranging resolution.

The N frequency channel numbers are arranged in ascending order, a length of a frequency baseline between any two adjacent frequency channel numbers in the N frequency channel numbers is the same and is $b_1$, and a length of a frequency baseline between two frequency channel numbers with a maximum length of a frequency baseline in the $N$ frequency channel numbers is $b_3$, that is, a length of a frequency baseline between a $1^{st}$ frequency channel number and an $N^{th}$ frequency channel number in the $N$ frequency channel numbers is $b_3$. $b_1$ is less than or equal to a second value, and the second value is equal to a value obtained by dividing a speed of light by the maximum unambiguous ranging distance; and $b_3$ is greater than or equal to a third value, and the third value is equal to a value obtained by dividing a speed of light by the ranging resolution. $N$ is an integer greater than 1.

S205: The first device evenly divides the $N$ frequency channel numbers into $M_2$ resource blocks.

A quantity of frequency channel numbers included in each of the $M_2$ resource blocks is $K$, and two resource blocks that are adjacent in frequency domain in the $M_2$ resource blocks include $q$ same frequency channel numbers, where $K$ and $M_2$ are integers greater than 1, $M_2$ is an odd number, $q$ is a positive integer, and $q$ is less than $K$. In a process in which the first device evenly divides the $N$ frequency channel numbers into the $M_2$ resource blocks, $N, M_2, K,$ and $q$ need to satisfy $N = M_2 \times K - (M_2 - 1) \times q$.

The $M_2$ resource blocks are sorted in ascending order of frequencies, a length of a frequency baseline between any two adjacent resource blocks in the $M_2$ resource blocks is the same and is $B_1$, and a length of a frequency baseline between two resource blocks with a maximum length of a frequency baseline in the $M_2$ resource blocks is $B_2$, that is, a length of a frequency baseline between a $1^{st}$ resource block and an $M_2^{th}$ resource block in the $M_2$ resource blocks is $B_2$.

The $K$ frequency channel numbers included in each of the $M_2$ resource blocks are arranged in ascending order of frequencies, a length of a frequency baseline between any two adjacent frequency channel numbers in the $K$ frequency channel numbers is the same and is $b_1$, and a length of a frequency baseline between two frequency channel numbers with a maximum length of a frequency baseline is $b_2$, that is, a length of a frequency baseline between a $1^{st}$ frequency channel number and a $K^{th}$ frequency channel number in the $K$ frequency channel numbers is $b_2$.

S206: The first device determines $M_1$ candidate resource blocks from the $M_2$ resource blocks.

The $M_2$ resource blocks are sorted in ascending order of frequencies, and the $M_1$ candidate resource blocks are

$$\frac{M_2 + 1}{2}$$

resource blocks sorted in odd-numbered positions in the $M_2$ resource blocks.

S207: The first device determines $M$ sensing resource blocks from the $M_1$ candidate resource blocks.

The $M$ sensing resource blocks are candidate resource blocks included in a first combination determined from the

$M_1$ candidate resource blocks, and the first combination is a combination in which a length of a frequency baseline between different candidate resource blocks is a first length and a quantity of candidate resource blocks is the smallest. The first length is $p \times B_1$, and $p$=1, 2, ..., and $\dfrac{B_2}{B_1}$.

S208: The first device determines $K_1$ frequency channel numbers from the $K$ frequency channel numbers.

The $K$ frequency channel numbers are arranged in ascending order, a length of a frequency baseline between any two adjacent frequency channel numbers in the $K$ frequency channel numbers is the same and is $b_1$, and a length of a frequency baseline between two frequency channel numbers with a maximum length of a frequency baseline is $b_2$, that is, a length of a frequency baseline between a $1^{st}$ frequency channel number and a $K^{th}$ frequency channel number in the $K$ frequency channel numbers is $b_2$. A length of a frequency baseline between different frequency channel numbers in the $K_1$ frequency channel numbers is a second length, and the second length is $k \times b_1$, where $k$=1, 2, ..., and $\dfrac{b_2}{b_1}$.

A sequence of step S206 and step S208 and a sequence of step S207 and step S208 are not limited in this embodiment of this application.

S209: The first device determines frequency channel numbers used for sensing based on the $M$ sensing resource blocks and the $K_1$ frequency channel numbers.

If the $K$ frequency channel numbers in step S208 are $K$ frequency channel numbers included in the $1^{st}$ resource block in the $M_2$ resource blocks, a set formed by the frequency channel numbers used for sensing is

$$\mathbf{S}_1 = \bigcup_i^M \left[ (m_i - 1) \times (K - q) \times b_1 + \mathbf{S}_2 \right]$$

. If the $K$ frequency channel numbers in step S208 are $K$ frequency channel numbers whose frequencies are 0, $b_1$, $2b_1$, ..., and $(K-1)b_1$, a set formed by the frequency channel numbers used for sensing is

$$\mathbf{S}_1 = f_{start1} + \bigcup_i^M \left[ (m_i - 1) \times (K - q) \times b_1 + \mathbf{S}_2 \right]$$

.

The $M_2$ resource blocks correspond to numbers 1 to $M_2$ one by one in ascending order of frequencies, and $m_i$ is a number corresponding to an $i^{th}$ sensing resource block in the $M$ sensing resource blocks; $\mathbf{S}_2$ is a set formed by the $K_1$ frequency channel numbers; and $f_{start1}$ is a frequency of the $1^{st}$ frequency channel number when the $N$ frequency channel numbers in step S205 are arranged in ascending order of frequencies.

S210: The first device sends frequency channel number information used for sensing to the second device. Correspondingly, the second device receives the frequency channel number information used for sensing from the first device.

S211: The first device sends a sensing signal on the frequency channel numbers used for sensing. Correspondingly, the second device receives the sensing signal on the frequency channel numbers used for sensing. The sensing signal received by the second device is obtained after the sensing signal sent by the first device passes through a channel between the first device and a sensing object, is reflected by the sensing object, and passes through a channel between the sensing object and the second device.

S212: The second device performs sensing based on the sensing signal.

For specific descriptions in the foregoing steps, refer to related descriptions in the sensing signal transmission method shown in FIG. 5. Details are not described again.

The sensing signal transmission method provided in this embodiment of this application may be applied to a scenario in which a frequency band in 5G NR belongs to a frequency range 1 (frequency range 1, FR1), a subcarrier spacing is 30 KHz, and a maximum available bandwidth is 98.28 megahertz (megahertz, MHz). The following uses an example in which the maximum unambiguous ranging distance is 390 meters, the ranging resolution is 3.06 meters, and the speed of light is $3 \times 10^8$ meters/second for description.

In this scenario, the first device may determine, based on the speed of light and the maximum unambiguous ranging distance, that the second value is about 769.2 KHz, and may determine, based on the speed of light and the ranging resolution, that the third value is about 98.04 MHz. Limited by the subcarrier spacing, the first device further separately adjusts the second value and the third value to an integer multiple of the subcarrier spacing. An adjusted second value is

$$\left\lceil \frac{769.2 \, KHz}{30 \, KHz} \right\rceil \times 30 \, KHz = 750 \, KHz$$

, and an adjusted third value is

$$\left\lceil \frac{98.04 \, MHz}{30 \, KHz} \right\rceil \times 30 \, KHz = 98.07 \, MHz$$

, where $\lceil \; \rceil$ represents a round-up operation. To ensure that the third value is an integer multiple of the second value, the first device adjusts the adjusted third value to

$$\left\lceil \frac{98.07\ MHz}{750\ KHz} \right\rceil \times 750\ KHz = 98.25\ MHz$$

again.

The first device may determine 132 evenly distributed frequency channel numbers based on the adjusted second value and the third value obtained after the two adjustments. In the 132 frequency channel numbers, a length of a frequency baseline between two frequency channel numbers with a minimum length of a frequency baseline is 750 KHz, and a length of a frequency baseline between two frequency channel numbers with a maximum length of a frequency baseline is 98.25 MHz. Frequencies of the 132 frequency channel numbers are $f_{start1} + (n_1 - 1) \times 750\ KHz$, where $n_1$=1, 2, ..., and 132.

Then, the first device may evenly divide the determined 132 frequency channel numbers into three resource blocks, where each resource block includes 46 frequency channel numbers, and two adjacent resource blocks include three same frequency channel numbers. The first device arranges the three resource blocks in ascending order of frequencies, and determines a 1st resource block and a 3rd resource block from the three resource blocks as candidate resource blocks. In the two determined candidate resource blocks, a first combination in which frequency baselines are completely covered and a quantity of candidate resource blocks is the smallest includes the 1st resource block and the 3rd resource block. In this case, the first device may determine both the two candidate resource blocks as sensing resource blocks.

The first device may determine, from the 46 frequency channel numbers whose frequencies are 0, 750 KHz, ..., and $2 \times 750\ KHz$, that a second combination in which frequency baselines are completely covered and a quantity of frequency channel numbers is the smallest includes 13 frequency channel numbers, and frequencies of the 13 frequency channel numbers are $(n_2 - 1) \times 750\ KHz$, where $n_2$=1, 2, 4, 7, 14, 21, 28, 35, 39, 42, 43, 44 and 46.

Then, the first device may determine frequency channel numbers used for sensing from the two sensing resource blocks based on the second combination, and send a sensing signal on the determined frequency channel numbers used for sensing. Frequency channel numbers included in each of the two sensing resource blocks are arranged in ascending order, and frequency channel numbers used for sensing in each sensing resource block include 1st, 2nd, 4th, 7th, 14th, 21st, 28th, 35th, 39th, 42nd, 43rd, 44th, and 46th frequency channel numbers in the sensing resource block.

It can be learned that the first device hierarchically determines the frequency channel numbers used for sensing, and complexity is low. In addition, compared with a manner of directly sending the sensing signal by the first device by using the determined 132 frequency channel numbers, this implementation enables the first device to transmit the sensing signal by using a smaller quantity of frequency channel numbers, to meet a sensing requirement that the maximum unambiguous ranging distance is 390 meters and the ranging resolution is 3.06 meters.

The sensing signal transmission method provided in this embodiment of this application may be further applied to a scenario in which a frequency band in 5G NR belongs to a frequency range 2 (frequency range 2, FR2), a subcarrier spacing is 120 KHz, and a maximum available bandwidth is 380.14 MHz. The following uses an example in which the maximum unambiguous ranging distance is 390 meters, the ranging resolution is 0.8 meters, and the speed of light is $3 \times 10^8$ meters/second for description.

The first device may determine, based on the maximum unambiguous ranging distance and the ranging resolution, that an adjusted second value is 720 KHz, and a third value obtained after the two adjustments is 375.12 MHz. The first device may determine 522 evenly distributed frequency channel numbers based on the adjusted second value and the third value obtained after the two adjustments. In the 522 frequency channel numbers, a length of a frequency baseline between two frequency channel numbers with a minimum length of a frequency baseline is 720 KHz, and a length of a frequency baseline between two frequency channel numbers with a maximum length of a frequency baseline is 375.12 MHz. Frequencies of the 522 frequency channel numbers are $h_{start1} + (n_3 - 1) \times 720\ KHz$, where $n_3$=1, 2, ..., and 522. A manner in which the first device determines the second value and the third value is similar to the manner in which the first device determines the second value and the third value in the scenario in which the subcarrier spacing is 30 KHz. Details are not described again.

Then, the first device may evenly divide the determined 522 frequency channel numbers into 13 resource blocks, where each resource block includes 42 frequency channel numbers, and two adjacent resource blocks include two same frequency channel numbers. The first device arranges the 13 resource blocks in ascending order of frequencies, and determines seven resource blocks arranged in odd-numbered positions from the 13 resource blocks as seven candidate resource blocks. In the determined seven candidate resource blocks, a first combination in which frequency baselines are completely covered and a quantity of candidate resource blocks is the smallest includes the following four candidate resource blocks: a 1st resource block, a 3rd resource block, a 9th resource block, and a 13th resource block in the 13 resource blocks. In this case, the first device may determine all the four candidate resource blocks as sensing resource blocks.

The first device may determine, from the 42 frequency channel numbers whose frequencies are 0, 720 KHz, $2 \times 750\ KHz$, ..., and $41 \times 720\ KHz$, that a second combination in which frequency baselines are completely covered and a quantity of frequency channel numbers is the smallest includes 12 frequency channel numbers, and frequencies of the 12 frequency channel numbers are $(n_4 - 1) \times 720 \, KHz$, where $n_4$=1, 2, 4, 7, 14, 21, 28, 32, 36, 37, 41, and 42.

Then, the first device may determine frequency channel numbers used for sensing from the four sensing resource blocks based on the second combination, and send a sensing signal on the determined frequency channel numbers used for sensing. Frequency channel numbers included in each of the four sensing resource blocks are arranged in ascending order, and frequency channel numbers used for sensing in each sensing resource block include 1st, 2nd, 4th, 7th, 14th, 21st, 28th, 32nd, 36th, 37th, 41st, and 42nd frequency channel numbers in the sensing resource block.

It can be learned that the first device hierarchically determines the frequency channel numbers used for sensing, and complexity is low. In addition, compared with a manner of directly sending the sensing signal by the first device by using the determined 522 frequency channel numbers, this implementation enables the first device to transmit the sensing signal by using a smaller quantity of frequency channel numbers, to meet a sensing requirement that the maximum unambiguous ranging distance is 390 meters and the ranging resolution is 0.8 meters.

To implement functions in the foregoing methods provided in embodiments of this application, the first device or the second device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

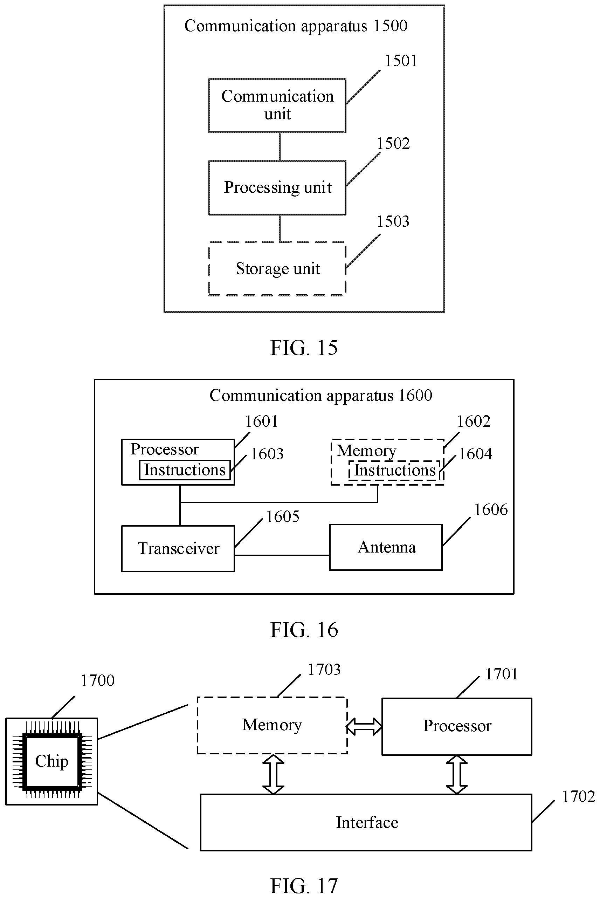

As shown in FIG. 15, an embodiment of this application provides a communication apparatus 1500. The communication apparatus 1500 may be a component (for example, an integrated circuit or a chip) of a first device, or may be a component (for example, an integrated circuit or a chip) of a second device. Alternatively, the communication apparatus 1500 may be another communication unit, configured to implement the methods in the method embodiments of this application. The communication apparatus 1500 may include a communication unit 1501 and a processing unit 1502. The processing unit 1502 is configured to control the communication unit 1501 to perform data/signaling receiving and sending. Optionally, the communication apparatus 1500 may further include a storage unit 1503.

In a possible design, the processing unit 1502 is configured to determine frequency channel numbers used for sensing from $M$ sensing resource blocks.

The communication unit 1501 is configured to send a sensing signal on the frequency channel numbers used for sensing.

The $M$ sensing resource blocks are determined from $M_1$ candidate resource blocks, and the $M$ sensing resource blocks include a 1st candidate resource block and an $M_1$th candidate resource block in the $M_1$ candidate resource blocks; a quantity of frequency channel numbers included in each of the $M$ sensing resource blocks is $K$; and $M$, $M_1$, and $K$ are integers greater than 1, and $M$ is less than or equal to $M_1$.

The frequency channel numbers used for sensing include: a 1st frequency channel number, a $K$th frequency channel number, an $i$th frequency channel number, and a $j$th frequency channel number in each of the $M$ sensing resource blocks; a length of a frequency baseline between the $i$th frequency channel number and the $j$th frequency channel number is a first value, and i and j are positive integers less than or equal to $K$; and a length of a frequency baseline between two frequency channel numbers is an absolute value of a frequency difference between the two frequency channel numbers. Relative positions of frequency channel numbers used for sensing in each of the $M$ sensing resource blocks are the same.

In an optional implementation, a length of a frequency baseline between different sensing resource blocks in the $M$ sensing resource blocks is a first length; and the first length is $p \times B_1$, and p=1, 2, ..., and $\dfrac{B_2}{B_1}$.

A length of a frequency baseline between two sensing resource blocks is an absolute value of a frequency difference between $l$th frequency channel numbers in the two sensing resource blocks; in the $M$ sensing resource blocks, a length of a frequency baseline between two sensing resource blocks with a minimum length of a frequency baseline is $B_1$, and a length of a frequency baseline between two sensing resource blocks with a maximum length of a frequency baseline is $B_2$; and $l$ is a positive integer less than or equal to $K$.

In an optional implementation, a length of a frequency baseline between different frequency channel numbers in the frequency channel numbers used for sensing in each sensing resource block is a second length; and the second length is $k \times b_1$, and k=1, 2, ..., and $\dfrac{b_2}{b_1}$.

In the frequency channel numbers used for sensing in each sensing resource block, a length of a frequency baseline between two frequency channel numbers with a minimum length of a frequency baseline is $b_1$, and a length of a frequency baseline between two frequency channel numbers with a maximum length of a frequency baseline is $b_2$; and $b_1$ is equal to the first value.

In an optional implementation, the $M$ sensing resource blocks are candidate resource blocks included in a first combination determined from the $M_1$ candidate resource blocks, and the first combination is a combination in which a length of a frequency baseline between different candidate resource blocks is the first length and a quantity of candidate resource blocks is the smallest.

A length of a frequency baseline between two candidate resource blocks is an absolute value of a frequency difference between $l^{th}$ frequency channel numbers in the two candidate resource blocks; and in the $M_1$ candidate resource blocks, a length of a frequency baseline between two candidate resource blocks with a minimum length of a frequency baseline is $B_1$, and a length of a frequency baseline between two candidate resource blocks with a maximum length of a frequency baseline is $B_2$.

In an optional implementation, relative positions of the frequency channel numbers used for sensing in each sensing resource block and frequency channel numbers included in a second combination are the same; and the second combination is a combination that is determined from $K$ frequency channel numbers and in which a length of a frequency baseline between different frequency channel numbers is the second length and a quantity of frequency channel numbers is the smallest.

In the $K$ frequency channel numbers, a length of a frequency baseline between two frequency channel numbers with a minimum length of a frequency baseline is $b_1$, and a length of a frequency baseline between two frequency channel numbers with a maximum length of a frequency baseline is $b_2$.

In an optional implementation, a length of a frequency baseline between any two adjacent candidate resource blocks in the $M_1$ candidate resource blocks is the same.

In an optional implementation, a length of a frequency baseline between any two adjacent frequency channel numbers in the $K$ frequency channel numbers is the same.

In an optional implementation, the first value is determined based on a maximum unambiguous ranging distance. A length of a frequency baseline between a $1^{st}$ frequency channel number in the $1^{st}$ candidate resource block and a $K^{th}$ frequency channel number in the $M_1^{th}$ candidate resource block in the $M_1$ candidate resource blocks is determined based on a ranging resolution.

In an optional implementation, the $M_1$ candidate resource blocks are determined from $M_2$ resource blocks obtained by evenly dividing $N$ frequency channel numbers, and a length of a frequency baseline between two frequency channel numbers with a minimum length of a frequency baseline in the N frequency channel numbers is the first value; and $M_1$ is less than or equal to $M_2$. A quantity of frequency channel numbers included in each of the $M_2$ resource blocks is $K$, and $M_2$ is an integer greater than 1.

In an optional implementation, a length of a frequency baseline between any two adjacent frequency channel numbers in the N frequency channel numbers is the same.

In an optional implementation, two resource blocks that are adjacent in frequency domain in the $M_2$ resource blocks include $q$ same frequency channel numbers, where $q$ is a positive integer and $q$ is less than $K$. $N$, $M_2$, $K$, and $q$ satisfy: $N = M_2 \times K - (M_2 - 1) \times q$ .

In an optional implementation, $M_2$ is an odd number, and $M_1$ is equal to a value obtained by dividing a value obtained by adding 1 to $M_2$ by 2. The $M_2$ resource blocks are sorted in ascending order in frequency domain, and the $M_1$ candidate resource blocks are resource blocks sorted in odd-numbered positions in the $M_2$ resource blocks.

In an optional implementation, the communication unit 1501 is further configured to: send frequency channel number information used for sensing; or send position information of the $M$ sensing resource blocks in frequency domain and frequency channel number information used for sensing in one of the $M$ sensing resource blocks; or send sensing resource indexes corresponding to the $M$ sensing resource blocks and sensing resource indexes corresponding to frequency channel numbers used for sensing in one of the $M$ sensing resource blocks.

This embodiment of this application and the foregoing method embodiment are based on a same concept, and bring same technical effect. For a specific principle, refer to the descriptions of the foregoing embodiment. Details are not described again.

In another communication design, the communication unit 1501 is configured to receive a sensing signal on frequency channel numbers used for sensing, where the frequency channel numbers used for sensing are determined from $M$ sensing resource blocks.

The processing unit 1502 is configured to perform sensing based on the sensing signal.

The $M$ sensing resource blocks are determined from $M_1$ candidate resource blocks, and the $M$ sensing resource blocks include a $1^{st}$ candidate resource block and an $M_1^{th}$ candidate resource block in the $M_1$ candidate resource blocks; a quantity of frequency channel numbers included in each of the $M$ sensing resource blocks is $K$; and $M$, $M_1$, and $K$ are integers greater than 1, and $M$ is less than or equal to $M_1$.

The frequency channel numbers used for sensing include: a $1^{st}$ frequency channel number, a $K^{th}$ frequency channel number, an $i^{th}$ frequency channel number, and a $j^{th}$ frequency channel number in each of the $M$ sensing resource blocks; a length of a frequency baseline between the $i^{th}$ frequency channel number and the $j^{th}$ frequency channel number is a first value, and i and j are positive integers less than or equal to $K$; and a length of a frequency baseline between two frequency channel numbers is an absolute value of a frequency difference between the two frequency channel numbers. Relative positions of frequency channel numbers used for sensing in each of the $M$ sensing resource blocks are the same.

In an optional implementation, a length of a frequency baseline between different sensing resource blocks in the $M$ sensing resource blocks is a first length; and the first length is $p \times B_1$, and $p$=1, 2, ..., and $\dfrac{B_2}{B_1}$.

A length of a frequency baseline between two sensing resource blocks is an absolute value of a frequency difference between $l$th frequency channel numbers in the two sensing resource blocks; in the $M$ sensing resource blocks, a length of a frequency baseline between two sensing resource blocks with a minimum length of a frequency baseline is $B_1$, and a length of a frequency baseline between two sensing resource blocks with a maximum length of a frequency baseline is $B_2$; and $l$ is a positive integer less than or equal to $K$.

In an optional implementation, a length of a frequency baseline between different frequency channel numbers in the frequency channel numbers used for sensing in each sensing resource block is a second length; and the second length is $k \times b_1$, and $k$=1, 2, ..., and $\dfrac{b_2}{b_1}$.

In the frequency channel numbers used for sensing in each sensing resource block, a length of a frequency baseline between two frequency channel numbers with a minimum length of a frequency baseline is $b_1$, and a length of a frequency baseline between two frequency channel numbers with a maximum length of a frequency baseline is $b_2$; and $b_1$ is equal to the first value.

In an optional implementation, the $M$ sensing resource blocks are candidate resource blocks included in a first combination determined from the $M_1$ candidate resource blocks, and the first combination is a combination in which a length of a frequency baseline between different candidate resource blocks is the first length and a quantity of candidate resource blocks is the smallest.

A length of a frequency baseline between two candidate resource blocks is an absolute value of a frequency difference between $l$th frequency channel numbers in the two candidate resource blocks; and in the $M_1$ candidate resource blocks, a length of a frequency baseline between two candidate resource blocks with a minimum length of a frequency baseline is $B_1$, and a length of a frequency baseline between two candidate resource blocks with a maximum length of a frequency baseline is $B_2$.

In an optional implementation, relative positions of the frequency channel numbers used for sensing in each sensing resource block and frequency channel numbers included in a second combination are the same; and the second combination is a combination that is determined from $K$ frequency channel numbers and in which a length of a frequency baseline between different frequency channel numbers is the second length and a quantity of frequency channel numbers is the smallest.

In the $K$ frequency channel numbers, a length of a frequency baseline between two frequency channel numbers with a minimum length of a frequency baseline is $b_1$, and a length of a frequency baseline between two frequency channel numbers with a maximum length of a frequency baseline is $b_2$.

In an optional implementation, a length of a frequency baseline between any two adjacent candidate resource blocks in the $M_1$ candidate resource blocks is the same.

In an optional implementation, a length of a frequency baseline between any two adjacent frequency channel numbers in the $K$ frequency channel numbers is the same.

In an optional implementation, the first value is determined based on a maximum unambiguous ranging distance. A length of a frequency baseline between a 1st frequency channel number in the 1st candidate resource block and a $K$th frequency channel number in the $M_1$th candidate resource block in the $M_1$ candidate resource blocks is determined based on a ranging resolution.

In an optional implementation, the $M_1$ candidate resource blocks are determined from $M_2$ resource blocks obtained by evenly dividing $N$ frequency channel numbers, and a length of a frequency baseline between two frequency channel numbers with a minimum length of a frequency baseline in the $N$ frequency channel numbers is the first value; and $M_1$ is less than or equal to $M_2$. A quantity of frequency channel numbers included in each of the $M_2$ resource blocks is $K$, and $M_2$ is an integer greater than 1.

In an optional implementation, a length of a frequency baseline between any two adjacent frequency channel numbers in the $N$ frequency channel numbers is the same.

In an optional implementation, two resource blocks that are adjacent in frequency domain in the $M_2$ resource blocks include $q$ same frequency channel numbers, where $q$ is a positive integer and $q$ is less than $K$. $N$, $M_2$, $K$, and $q$ satisfy: $N = M_2 \times K - (M_2 - 1) \times q$.

In an optional implementation, $M_2$ is an odd number, and $M_1$ is equal to a value obtained by dividing a value obtained by adding 1 to $M_2$ by 2. The $M_2$ resource blocks are sorted in ascending order in frequency domain, and the $M_1$ candidate resource blocks are resource blocks sorted in odd-numbered positions in the $M_2$ resource blocks.

In an optional implementation, the communication unit 1501 is further configured to: receive frequency channel number information used for sensing; or receive position information of the $M$ sensing resource blocks in frequency domain and frequency channel number information used for sensing in one of the $M$ sensing resource blocks; or receive sensing resource indexes corresponding to the $M$ sensing resource blocks and sensing resource indexes corresponding to frequency channel numbers used for sensing in one of the $M$ sensing resource blocks.

This embodiment of this application and the foregoing method embodiment are based on a same concept, and bring same technical effect. For a specific principle, refer to the descriptions of the foregoing embodiment. Details are not described again.

An embodiment of this application further provides a communication apparatus 1600, as shown in FIG. 16. The communication apparatus 1600 may be a first device or a second device, or may be a chip, a chip system, a processor, or the like that supports the first device or the second device in implementing the foregoing methods, or may be a chip, a chip system, a processor, or the like that supports the second device in implementing the foregoing methods. The apparatus may be configured to implement the methods described in the foregoing method embodiments. For details, refer to the descriptions in the foregoing method embodiments.

The communication apparatus 1600 may include one or more processors 1601. The processor may be configured to implement some or all functions of the first device or the second device by using a logic circuit or by running a computer program. The processor 1601 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

Optionally, the communication apparatus 1600 may include one or more memories 1602. The memory 1602 stores instructions 1604, and the instructions may be run on the processor 1601, to enable the communication apparatus 1600 to perform the methods described in the foregoing method embodiments. Optionally, the memory 1602 may further store data. The processor 1601 and the memory 1602 may be separately disposed, or may be integrated together.

The memory 1602 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), or the like.

Optionally, the communication apparatus 1600 may further include a transceiver 1605 and an antenna 1606. The transceiver 1605 may be referred to as a transceiver unit, a transceiver machine, a transceiver circuit, or the like, and is configured to implement receiving and sending functions. The transceiver 1605 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

The communication apparatus 1600 is a first device. The transceiver 1605 is configured to perform S102 in FIG. 5, and is configured to perform S203, S210, and S211 in FIG. 14. The processor 1601 is configured to perform S101 in FIG. 5, and is configured to perform S204 to S209 in FIG. 14.

The communication apparatus 1600 is a second device. The transceiver 1605 is configured to perform S201, S210, and S211 in FIG. 14. The processor 1601 is configured to perform S202 and S212 in FIG. 14.

In another possible design, the processor 1601 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1601 may store instructions 1603, and the instructions 1603 are run on the processor 1601, so that the communication apparatus 1600 can perform the methods described in the foregoing method embodiments. The instructions 1603 may be fixed in the processor 1601. In this case, the processor 1601 may be implemented by hardware.

In yet another possible design, the communication apparatus 1600 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-metal-oxide-semiconductor (N-metal-oxide-semiconductor, NMOS), a p-metal-oxide-semiconductor (positive channel metal-oxide-semiconductor, PMOS), a bipolar junction transistor (bipolar junction transistor, BJT), a bipolar CMOS (BiCMOS), silicon germanium (SiGe), and gallium arsenide (GaAs).

The communication apparatus described in the foregoing embodiments may be the first device or the second device. However, a scope of the communication apparatus described in embodiments of this application is not limited thereto, and a structure of the communication apparatus may not be limited by FIG. 16. The communication apparatus may be an independent device or may be a part of a large device. For example, the communication apparatus may be:

(1) an independent integrated circuit IC, a chip, or a chip system or subsystem;

(2) a set that has one or more ICs, where optionally, the IC set may alternatively include a storage component configured to store data and instructions;

(3) an ASIC, such as a modem (modulator);

(4) a module that can be embedded in another device;

(5) a receiver, a terminal, an intelligent terminal, a cellular phone, a wireless device, a handheld device, a mobile unit, a vehicle-mounted device, a network device, a cloud device, an artificial intelligence device, or the like; or

(6) others.

For a case in which the communication apparatus may be a chip or a chip system, refer to a diagram of a structure of a chip shown in FIG. 17. The chip 1700 shown in FIG. 17 includes a processor 1701 and an interface 1702. There may be one or more processors 1701, and there may be a plurality of interfaces 1702. The processor 1701 may be a logic circuit, and the interface 1702 may be an input/output interface, an input interface, or an output interface. The chip 1700 may further include a memory 1703.

In a design, for a case in which the chip is configured to implement a function of the first device in this embodiment of this application:

The processor 1701 is configured to determine frequency channel numbers used for sensing from $M$ sensing resource blocks.

The interface 1702 is configured to send a sensing signal on the frequency channel numbers used for sensing.

The $M$ sensing resource blocks are determined from $M_1$ candidate resource blocks, and the $M$ sensing resource blocks include a 1st candidate resource block and an $M_1{}^{th}$ candidate resource block in the $M_1$ candidate resource blocks; a quantity of frequency channel numbers included in each of the $M$ sensing resource blocks is $K$; and $M$, $M_1$, and $K$ are integers greater than 1, and $M$ is less than or equal to $M_1$.

The frequency channel numbers used for sensing include: a 1st frequency channel number, a $K^{th}$ frequency channel number, an $i^{th}$ frequency channel number, and a $j^{th}$ frequency channel number in each of the $M$ sensing resource blocks; a length of a frequency baseline between the $i^{th}$ frequency channel number and the $j^{th}$ frequency channel number is a first value, and i and $j$ are positive integers less than or equal to $K$; and a length of a frequency baseline between two frequency channel numbers is an absolute value of a frequency difference between the two frequency channel numbers. Relative positions of frequency channel numbers used for sensing in each of the $M$ sensing resource blocks are the same.

In another design, for a case in which the chip is configured to implement a function of the second device in this embodiment of this application:

The interface 1702 is configured to receive a sensing signal on frequency channel numbers used for sensing, where the frequency channel numbers used for sensing are determined from $M$ sensing resource blocks.

The processor 1701 is configured to perform sensing based on the sensing signal.

The $M$ sensing resource blocks are determined from $M_1$ candidate resource blocks, and the $M$ sensing resource blocks include a 1st candidate resource block and an $M_1{}^{th}$ candidate resource block in the $M_1$ candidate resource blocks; a quantity of frequency channel numbers included in each of the $M$ sensing resource blocks is $K$; and $M$, $M_1$, and $K$ are integers greater than 1, and $M$ is less than or equal to $M_1$.

The frequency channel numbers used for sensing include: a 1st frequency channel number, a $K^{th}$ frequency channel number, an $i^{th}$ frequency channel number, and a $j^{th}$ frequency channel number in each of the $M$ sensing resource blocks; a length of a frequency baseline between the $i^{th}$ frequency channel number and the $j^{th}$ frequency channel number is a first value, and i and $j$ are positive integers less than or equal to $K$; and a length of a frequency baseline between two frequency channel numbers is an absolute value of a frequency difference between the two frequency channel numbers. Relative positions of frequency channel numbers used for sensing in each of the $M$ sensing resource blocks are the same.

In embodiments of this application, the communication apparatus 1600 and the chip 1700 may further perform the implementations of the communication apparatus 1500. A person skilled in the art may further understand that various illustrative logical blocks (illustrative logic blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the foregoing sensing signal transmission method are based on a same concept, and bring same technical effect. For a specific principle, refer to the descriptions in the foregoing sensing signal transmission method. Details are not described again.

A person skilled in the art may further understand that various illustrative logical blocks (illustrative logic blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes at least one first device and at least one second device in the foregoing aspects. In another possible design, the system further includes at least one third device in the foregoing aspects. In still another possible design, the system may further include another device that is in the solutions provided in this application and that interacts with the first device, the second device, and the third device.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A sensing signal transmission method, wherein the method comprises:

determining frequency channel numbers used for sensing from $M$ sensing resource blocks; and

sending a sensing signal on the frequency channel numbers used for sensing, wherein

the $M$ sensing resource blocks are determined from $M_1$ candidate resource blocks, and the $M$ sensing resource blocks comprise a $1^{st}$ candidate resource block and an $M_1^{th}$ candidate resource block in the $M_1$ candidate resource blocks; a quantity of frequency channel numbers comprised in each of the $M$ sensing resource blocks is $K$; and $M, M_1,$ and $K$ are integers greater than 1, and $M$ is less than or equal to $M_1$;

the frequency channel numbers used for sensing comprise: a $1^{st}$ frequency channel number, a $K^{th}$ frequency channel number, an $i^{th}$ frequency channel number, and a $j^{th}$ frequency channel number in each of the $M$ sensing resource blocks; a length of a frequency baseline between the $i^{th}$ frequency channel number and the $j^{th}$ frequency channel number is a first value, and i and j are positive integers less than or equal to $K$; and a length of a frequency baseline between two frequency channel numbers is an absolute value of a frequency difference between the two frequency channel numbers; and

relative positions of frequency channel numbers used for sensing in each of the $M$ sensing resource blocks are the same.

2. A sensing signal transmission method, wherein the method comprises:

receiving a sensing signal on frequency channel numbers used for sensing, wherein the frequency channel numbers used for sensing are determined from $M$ sensing resource blocks; and

performing sensing based on the sensing signal, wherein

the $M$ sensing resource blocks are determined from $M_1$ candidate resource blocks, and the $M$ sensing resource blocks comprise a 1st candidate resource block and an $M_1$th candidate resource block in the $M_1$ candidate resource blocks; a quantity of frequency channel numbers comprised in each of the $M$ sensing resource blocks is $K$; and $M$, $M_1$, and $K$ are integers greater than 1, and $M$ is less than or equal to $M_1$;

the frequency channel numbers used for sensing comprise: a 1st frequency channel number, a $K$th frequency channel number, an $i$th frequency channel number, and a $j$th frequency channel number in each of the $M$ sensing resource blocks; a length of a frequency baseline between the $i$th frequency channel number and the $j$th frequency channel number is a first value, and i and $j$ are positive integers less than or equal to $K$; and a length of a frequency baseline between two frequency channel numbers is an absolute value of a frequency difference between the two frequency channel numbers; and

relative positions of frequency channel numbers used for sensing in each of the $M$ sensing resource blocks are the same.

3. The method according to claim 1 or 2, wherein

a length of a frequency baseline between different sensing resource blocks in the $M$ sensing resource blocks is a first length; and the first length is $p \times B_1$, and $p=1, 2, ...,$ and $\dfrac{B_2}{B_1}$ ; and

a length of a frequency baseline between two sensing resource blocks is an absolute value of a frequency difference between $l$th frequency channel numbers in the two sensing resource blocks; in the $M$ sensing resource blocks, a length of a frequency baseline between two sensing resource blocks with a minimum length of a frequency baseline is $B_1$, and a length of a frequency baseline between two sensing resource blocks with a maximum length of a frequency baseline is $B_2$; and $l$ is a positive integer less than or equal to $K$.

4. The method according to any one of claims 1 to 3, wherein

a length of a frequency baseline between different frequency channel numbers in the frequency channel numbers used for sensing in each sensing resource block is a second length; and the second length is $k \times b_1$, and $k=1, 2, ...,$

and $\dfrac{b_2}{b_1}$ ; and

in the frequency channel numbers used for sensing in each sensing resource block, a length of a frequency baseline between two frequency channel numbers with a minimum length of a frequency baseline is $b_1$, and a length of a frequency baseline between two frequency channel numbers with a maximum length of a frequency baseline is $b_2$; and $b_1$ is equal to the first value.

5. The method according to claim 3 or 4, wherein

the $M$ sensing resource blocks are candidate resource blocks comprised in a first combination determined from the $M_1$ candidate resource blocks, and the first combination is a combination in which a length of a frequency baseline between different candidate resource blocks is the first length and a quantity of candidate resource blocks is the smallest; and

a length of a frequency baseline between two candidate resource blocks is an absolute value of a frequency difference between $l$th frequency channel numbers in the two candidate resource blocks; and in the $M_1$ candidate resource blocks, a length of a frequency baseline between two candidate resource blocks with a minimum length of a frequency baseline is $B_1$, and a length of a frequency baseline between two candidate resource blocks with a maximum length of a frequency baseline is $B_2$.

6. The method according to claim 4 or 5, wherein

relative positions of the frequency channel numbers used for sensing in each sensing resource block and frequency channel numbers comprised in a second combination are the same; and the second combination is a combination that is determined from $K$ frequency channel numbers and in which a length of a frequency baseline between different frequency channel numbers is the second length and a quantity of frequency channel numbers is the smallest; and
in the $K$ frequency channel numbers, a length of a frequency baseline between two frequency channel numbers with a minimum length of a frequency baseline is $b_1$, and a length of a frequency baseline between two frequency channel numbers with a maximum length of a frequency baseline is $b_2$.

7. The method according to claim 5 or 6, wherein
a length of a frequency baseline between any two adjacent candidate resource blocks in the $M_1$ candidate resource blocks is the same.

8. The method according to claim 6 or 7, wherein
a length of a frequency baseline between any two adjacent frequency channel numbers in the $K$ frequency channel numbers is the same.

9. The method according to any one of claims 1 to 8, wherein

the first value is determined based on a maximum unambiguous ranging distance; and
a length of a frequency baseline between a $1^{st}$ frequency channel number in the $1^{st}$ candidate resource block and a $K^{th}$ frequency channel number in the $M_1{}^{th}$ candidate resource block in the $M_1$ candidate resource blocks is determined based on a ranging resolution.

10. The method according to any one of claims 1 to 9, wherein

the $M_1$ candidate resource blocks are determined from $M_2$ resource blocks obtained by evenly dividing $N$ frequency channel numbers, and a length of a frequency baseline between two frequency channel numbers with a minimum length of a frequency baseline in the $N$ frequency channel numbers is the first value; and $M_1$ is less than or equal to $M_2$; and
a quantity of frequency channel numbers comprised in each of the $M_2$ resource blocks is $K$, and $M_2$ is an integer greater than 1.

11. The method according to claim 10, wherein
a length of a frequency baseline between any two adjacent frequency channel numbers in the $N$ frequency channel numbers is the same.

12. The method according to claim 10 or 11, wherein

two resource blocks that are adjacent in frequency domain in the $M_2$ resource blocks comprise $q$ same frequency channel numbers, wherein $q$ is a positive integer and $q$ is less than $K$; and
$N, M_2, K,$ and $q$ satisfy: $N = M_2 \times K - (M_2 - 1) \times q$ .

13. The method according to claim 12, wherein

$M_2$ is an odd number, and $M_1$ is equal to a value obtained by dividing a value obtained by adding 1 to $M_2$ by 2; and
the $M_2$ resource blocks are sorted in ascending order in frequency domain, and the $M_1$ candidate resource blocks are resource blocks sorted in odd-numbered positions in the $M_2$ resource blocks.

14. The method according to any one of claims 1 and 3 to 13, wherein the method further comprises:

sending frequency channel number information used for sensing; or
sending position information of the $M$ sensing resource blocks in frequency domain and frequency channel number information used for sensing in one of the $M$ sensing resource blocks; or
sending sensing resource indexes corresponding to the $M$ sensing resource blocks and sensing resource indexes corresponding to frequency channel numbers used for sensing in one of the $M$ sensing resource blocks.

**15.** The method according to any one of claims 2 to 13, wherein the method further comprises:

receiving frequency channel number information used for sensing; or

receiving position information of the $M$ sensing resource blocks in frequency domain and frequency channel number information used for sensing in one of the $M$ sensing resource blocks; or

receiving sensing resource indexes corresponding to the $M$ sensing resource blocks and sensing resource indexes corresponding to frequency channel numbers used for sensing in one of the $M$ sensing resource blocks.

**16.** A communication apparatus, wherein the apparatus comprises:

a processing unit, configured to determine frequency channel numbers used for sensing from $M$ sensing resource blocks; and

a communication unit, configured to send a sensing signal on the frequency channel numbers used for sensing, wherein

the $M$ sensing resource blocks are determined from $M_1$ candidate resource blocks, and the $M$ sensing resource blocks comprise a 1st candidate resource block and an $M_1$th candidate resource block in the $M_1$ candidate resource blocks; a quantity of frequency channel numbers comprised in each of the $M$ sensing resource blocks is $K$; and $M$, $M_1$, and $K$ are integers greater than 1, and $M$ is less than or equal to $M_1$;

the frequency channel numbers used for sensing comprise: a 1st frequency channel number, a $K$th frequency channel number, an $i$th frequency channel number, and a $j$th frequency channel number in each of the $M$ sensing resource blocks; a length of a frequency baseline between the $i$th frequency channel number and the $j$th frequency channel number is a first value, and $i$ and $j$ are positive integers less than or equal to $K$; and a length of a frequency baseline between two frequency channel numbers is an absolute value of a frequency difference between the two frequency channel numbers; and

relative positions of frequency channel numbers used for sensing in each of the $M$ sensing resource blocks are the same.

**17.** A communication apparatus, wherein the apparatus comprises:

a communication unit, configured to receive a sensing signal on frequency channel numbers used for sensing, wherein the frequency channel numbers used for sensing are determined from $M$ sensing resource blocks; and

a processing unit, configured to perform sensing based on the sensing signal, wherein

the $M$ sensing resource blocks are determined from $M_1$ candidate resource blocks, and the $M$ sensing resource blocks comprise a 1st candidate resource block and an $M_1$th candidate resource block in the $M_1$ candidate resource blocks; a quantity of frequency channel numbers comprised in each of the $M$ sensing resource blocks is $K$; and $M$, $M_1$, and $K$ are integers greater than 1, and $M$ is less than or equal to $M_1$;

the frequency channel numbers used for sensing comprise: a 1st frequency channel number, a $K$th frequency channel number, an $i$th frequency channel number, and a $j$th frequency channel number in each of the $M$ sensing resource blocks; a length of a frequency baseline between the $i$th frequency channel number and the $j$th frequency channel number is a first value, and i and $j$ are positive integers less than or equal to $K$; and a length of a frequency baseline between two frequency channel numbers is an absolute value of a frequency difference between the two frequency channel numbers; and

relative positions of frequency channel numbers used for sensing in each of the $M$ sensing resource blocks are the same.

**18.** The apparatus according to claim 16 or 17, wherein

a length of a frequency baseline between different sensing resource blocks in the $M$ sensing resource blocks is a first length; and the first length is $p \times B_1$ , and $p$=1, 2, ..., and $\dfrac{B_2}{B_1}$ ; and

a length of a frequency baseline between two sensing resource blocks is an absolute value of a frequency difference between $l$th frequency channel numbers in the two sensing resource blocks; in the $M$ sensing resource blocks, a length of a frequency baseline between two sensing resource blocks with a minimum length of a frequency baseline is $B_1$, and a length of a frequency baseline between two sensing resource blocks with a maximum length of a frequency baseline is $B_2$; and $l$ is a positive integer less than or equal to $K$.

**19.** The apparatus according to any one of claims 16 to 18, wherein

a length of a frequency baseline between different frequency channel numbers in the frequency channel numbers used for sensing in each sensing resource block is a second length; and the second length is $k \times b_1$, and $k$=1, 2, ...,

and $\dfrac{b_2}{b_1}$ ; and

in the frequency channel numbers used for sensing in each sensing resource block, a length of a frequency baseline between two frequency channel numbers with a minimum length of a frequency baseline is $b_1$, and a length of a frequency baseline between two frequency channel numbers with a maximum length of a frequency baseline is $b_2$; and $b_1$ is equal to the first value.

20. The apparatus according to claim 18 or 19, wherein

the $M$ sensing resource blocks are candidate resource blocks comprised in a first combination determined from the $M_1$ candidate resource blocks, and the first combination is a combination in which a length of a frequency baseline between different candidate resource blocks is the first length and a quantity of candidate resource blocks is the smallest; and

a length of a frequency baseline between two candidate resource blocks is an absolute value of a frequency difference between $l$<sup>th</sup> frequency channel numbers in the two candidate resource blocks; and in the $M_1$ candidate resource blocks, a length of a frequency baseline between two candidate resource blocks with a minimum length of a frequency baseline is $B_1$, and a length of a frequency baseline between two candidate resource blocks with a maximum length of a frequency baseline is $B_2$.

21. The apparatus according to claim 19 or 20, wherein

relative positions of the frequency channel numbers used for sensing in each sensing resource block and frequency channel numbers comprised in a second combination are the same; and the second combination is a combination that is determined from $K$ frequency channel numbers and in which a length of a frequency baseline between different frequency channel numbers is the second length and a quantity of frequency channel numbers is the smallest; and

in the $K$ frequency channel numbers, a length of a frequency baseline between two frequency channel numbers with a minimum length of a frequency baseline is $b_1$, and a length of a frequency baseline between two frequency channel numbers with a maximum length of a frequency baseline is $b_2$.

22. The apparatus according to claim 20 or 21, wherein
a length of a frequency baseline between any two adjacent candidate resource blocks in the $M_1$ candidate resource blocks is the same.

23. The apparatus according to claim 21 or 22, wherein
a length of a frequency baseline between any two adjacent frequency channel numbers in the $K$ frequency channel numbers is the same.

24. The apparatus according to any one of claims 16 to 23, wherein

the first value is determined based on a maximum unambiguous ranging distance; and
a length of a frequency baseline between a 1<sup>st</sup> frequency channel number in the 1<sup>st</sup> candidate resource block and a $K$<sup>th</sup> frequency channel number in the $M_1$<sup>th</sup> candidate resource block in the $M_1$ candidate resource blocks is determined based on a ranging resolution.

25. The apparatus according to any one of claims 16 to 24, wherein

the $M_1$ candidate resource blocks are determined from $M_2$ resource blocks obtained by evenly dividing N frequency channel numbers, and a length of a frequency baseline between two frequency channel numbers with a minimum length of a frequency baseline in the $N$ frequency channel numbers is the first value; and $M_1$ is less than or equal to $M_2$; and

a quantity of frequency channel numbers comprised in each of the $M_2$ resource blocks is $K$, and $M_2$ is an integer greater than 1.

26. The apparatus according to claim 25, wherein

a length of a frequency baseline between any two adjacent frequency channel numbers in the $N$ frequency channel numbers is the same.

27. The apparatus according to claim 25 or 26, wherein

two resource blocks that are adjacent in frequency domain in the $M_2$ resource blocks comprise $q$ same frequency channel numbers, wherein $q$ is a positive integer and $q$ is less than $K$; and
$N$, $M_2$, $K$, and $q$ satisfy: $N = M_2 \times K - (M_2 - 1) \times q$.

28. The apparatus according to claim 27, wherein

$M_2$ is an odd number, and $M_1$ is equal to a value obtained by dividing a value obtained by adding 1 to $M_2$ by 2; and the $M_2$ resource blocks are sorted in ascending order in frequency domain, and the $M_1$ candidate resource blocks are resource blocks sorted in odd-numbered positions in the $M_2$ resource blocks.

29. The apparatus according to any one of claims 16 and 18 to 28, wherein

the communication unit is further configured to send frequency channel number information used for sensing; or
the communication unit is further configured to send position information of the $M$ sensing resource blocks in frequency domain and frequency channel number information used for sensing in one of the $M$ sensing resource blocks; or
the communication unit is further configured to send sensing resource indexes corresponding to the $M$ sensing resource blocks and sensing resource indexes corresponding to frequency channel numbers used for sensing in one of the $M$ sensing resource blocks.

30. The apparatus according to any one of claims 17 to 28, wherein

the communication unit is further configured to receive frequency channel number information used for sensing; or
the communication unit is further configured to receive position information of the $M$ sensing resource blocks in frequency domain and frequency channel number information used for sensing in one of the $M$ sensing resource blocks; or
the communication unit is further configured to receive sensing resource indexes corresponding to the $M$ sensing resource blocks and sensing resource indexes corresponding to frequency channel numbers used for sensing in one of the $M$ sensing resource blocks.

31. A communication apparatus, comprising a processor, wherein the processor is configured to perform the method according to any one of claims 1 and 3 to 14 by using a logic circuit or by running a computer program, or is configured to perform the method according to any one of claims 2 to 13 and 15 by using a logic circuit or by running a computer program.

32. The apparatus according to claim 31, further comprising a transceiver, wherein the transceiver is configured to receive and send a signal.

33. The apparatus according to claim 31 or 32, further comprising a memory, wherein the memory is configured to store the computer program.

34. A computer-readable storage medium, wherein the computer-readable storage medium is configured to store instructions; and when the instructions are run on a computer, the method according to any one of claims 1 and 3 to 14 is performed, or the method according to any one of claims 2 to 13 and 15 is performed.

35. A computer program product comprising instructions, wherein when the computer program product runs on a computer, the method according to any one of claims 1 and 3 to 14 is performed, or the method according to any one of claims 2 to 13 and 15 is performed.

36. A computer program, wherein when the computer program is run on a computer, the method according to any one of claims 1 and 3 to 14 is performed, or the method according to any one of claims 2 to 13 and 15 is performed.

37. A communication system, wherein the communication system comprises a first device and a second device, wherein

the first device is configured to perform the method according to any one of claims 1 and 3 to 14; and
the second device is configured to perform the method according to any one of claims 2 to 13 and 15.

FIG. 1

FIG. 2a

FIG. 2b

FIG. 2c

FIG. 2d

FIG. 2e

FIG. 3a

Sensing area

Base
station

((·))

R

Vehicle

FIG. 3b

| $f_0$ | $f_1$ | $f_2$ | $f_3$ | $f_4$ | $f_5$ | $f_6$ |
|---|---|---|---|---|---|---|

Frequency

Low                                    High

FIG. 4a

Redundancy
amount of a
frequency
baseline

8

6

4

2

$-6b$ $-5b$ $-4b$ $-3b$ $-2b$ $-b$ $0$ $b$ $2b$ $3b$ $4b$ $5b$ $6b$

Frequency
baseline

FIG. 4b

FIG. 4c

A first device determines frequency channel numbers used for sensing from $M$ sensing resource blocks, where the $M$ sensing resource blocks are determined from $M_1$ candidate resource blocks, and the $M$ sensing resource blocks include a $1^{st}$ candidate resource block and an $M_1{}^{th}$ candidate resource block in the $M_1$ candidate resource blocks; a quantity of frequency channel numbers included in each of the $M$ sensing resource blocks is $K$; the frequency channel numbers used for sensing include: a $1^{st}$ frequency channel number, a $K^{th}$ frequency channel number, an $i^{th}$ frequency channel number, and a $j^{th}$ frequency channel number in each of the $M$ sensing resource blocks; a length of a frequency baseline between the $i^{th}$ frequency channel number and the $j^{th}$ frequency channel number is a first value; a length of a frequency baseline between two frequency channel numbers is an absolute value of a frequency difference between the two frequency channel numbers; and relative positions of frequency channel numbers used for sensing in each of the $M$ sensing resource blocks are the same

S101

The first device sends a first sensing signal on the frequency channel numbers used for sensing

S102

FIG. 5

FIG. 6

FIG. 7

FIG. 8

FIG. 9

FIG. 10

Frequency ▲ High

Resource
block $M_2$

$f_N$

⋮

⋮

$f_{21}$

$f_{20}$

Resource
block 3

$f_{19}$

$f_{18}$

$f_{17}$

$f_{16}$

$f_{15}$

$f_{14}$

$f_{13}$

$f_{12}$

$f_{11}$

$f_{10}$

$f_9$

$f_8$

$f_7$

Resource
block 2

Resource
block 1

$f_6$

$f_5$

$f_4$

$f_3$

$f_2$

$f_1$

Low

FIG. 11a

Frequency ▲ High

Resource block $M_2$

$f_N$

⋮

⋮

Resource block 3

$f_{21}$
$f_{20}$
$f_{19}$
$f_{18}$
$f_{17}$
$f_{16}$
$f_{15}$

$f_{14}$
$f_{13}$
$f_{12}$
$f_{11}$
$f_{10}$
$f_9$
$f_8$

Resource block 2

Resource block 1

$f_7$
$f_6$
$f_5$
$f_4$
$f_3$
$f_2$
$f_1$

Low

FIG. 11b

FIG. 12

FIG. 13

| Third device | | First device | | Second device |
|---|---|---|---|---|

S201: Trigger signal

S203: Maximum unambiguous ranging distance and ranging resolution

S202: The second device enables a sensing function

S204: The first device determines $N$ frequency channel numbers based on the maximum unambiguous ranging distance and the ranging resolution

S205: The first device evenly divides the $N$ frequency channel numbers into $M_2$ resource blocks

S206: The first device determines $M_1$ candidate resource blocks from the $M_2$ resource blocks

S207: The first device determines $M$ sensing resource blocks from the $M_1$ candidate resource blocks

S208: The first device determines $K_1$ frequency channel numbers from $K$ frequency channel numbers

S209: The first device determines frequency channel numbers used for sensing based on the $M$ sensing resource blocks and the $K_1$ frequency channel numbers

S210: Frequency channel number information used for sensing

S211: Sensing signal

S212: The second device performs sensing based on the sensing signal

FIG. 14

Communication apparatus 1500

Communication
unit                    1501

Processing unit         1502

Storage unit            1503

FIG. 15

Communication apparatus 1600

Processor               1601
Instructions            1603

Memory                  1602
Instructions            1604

Transceiver             1605

Antenna                 1606

FIG. 16

1700

1703    Memory

1701    Processor

Chip

1702    Interface

FIG. 17

| INTERNATIONAL SEARCH REPORT | International application No. |
|---|---|
| | **PCT/CN2023/099864** |

**A.  CLASSIFICATION OF SUBJECT MATTER**

H04B17/382(2015.01)i

According to International Patent Classification (IPC) or to both national classification and IPC

**B.    FIELDS SEARCHED**

Minimum documentation searched (classification system followed by classification symbols)

IC:H04B

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; GOOGLE; IEEE: 感知, 资源, 块, 频点, 频率, 频谱, 选择, 筛选, 均匀, 长度, 间隔, 基线, 差, 位置, 同, sense, resource, block, frequency, point, choose, select, baseline, length, interval, difference, same

**C.    DOCUMENTS CONSIDERED TO BE RELEVANT**

| Category* | Citation of document, with indication, where appropriate, of the relevant passages | Relevant to claim No. |
|---|---|---|
| A | CN 108347262 A (POTEVIO INFORMATION TECHNOLOGY CO., LTD.) 31 July 2018 (2018-07-31)<br>    description, paragraphs [0025]-[0055], and figures 1-2 | 1-37 |
| A | CN 103209495 A (POTEVIO INSTITUTE OF TECHNOLOGY CO., LTD.) 17 July 2013 (2013-07-17)<br>    entire document | 1-37 |
| A | WO 2022077516 A1 (HUAWEI TECHNOLOGIES CO., LTD.) 21 April 2022 (2022-04-21)<br>    entire document | 1-37 |
| A | US 2018092080 A1 (SAMSUNG ELECTRONICS CO., LTD.) 29 March 2018 (2018-03-29)<br>    entire document | 1-37 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 September 2023** | **09 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/099864**

| Patent document cited in search report | | | Publication date (day/month/year) | Patent family member(s) | | | Publication date (day/month/year) |
|---|---|---|---|---|---|---|---|
| CN | 108347262 | A | 31 July 2018 | CN | 108347262 | B | 22 November 2019 |
| CN | 103209495 | A | 17 July 2013 | CN | 103209495 | B | 20 January 2016 |
| WO | 2022077516 | A1 | 21 April 2022 | None | | | |
| US | 2018092080 | A1 | 29 March 2018 | KR | 20180035706 | A | 06 April 2018 |
| | | | | KR | 102362461 | B1 | 15 February 2022 |
| | | | | WO | 2018062874 | A1 | 05 April 2018 |
| | | | | US | 10506583 | B2 | 10 December 2019 |

Form PCT/ISA/210 (patent family annex) (July 2022)

**REFERENCES CITED IN THE DESCRIPTION**

**Patent documents cited in the description**

- CN 202210690357